# FASCICULE DE BREVET EUROPEEN

(11) **EP 4 392 392 B1**
(45) Date de publication et mention de la délivrance du brevet: **12.02.2025**
(21) Numéro de dépôt: 22800213.5
(22) Date de dépôt: 05.10.2022
(51) Int. Cl.: C05F 17/95, C05F 17/979, C05F 17/907

(54) **COMPOSTEUR DOMESTIQUE**
KOMPOSTIERGERÄT FÜR DEN HAUSHALT
DOMESTIC COMPOSTER

(30) Priorité: 07.10.2021 BE 202105781
(43) Date de publication de la demande: 03.07.2024
(73) Titulaire: Greenzy, 1460 Ittre (BE)
(72) Inventeur: DUPRET, Laetitia, 1200 Woluwé-Saint-Lambert (BE); BIEBUYCK, Adélaïde, 1460 Ittre (BE); MILANO, Fiona, 1400 Nivelles (BE); DEBETENCOURT, Sam, 5651 Laneffe (BE); CONVENT, Lionel, 1380 Lasne (BE); VANDEVENNE, Brecht, 2018 Antwerpen (BE); DE CLERCQ, Sander, 2140 Borgerhout (BE); KENIS, Kaat, 2990 Wuustwezel (BE)
(74) Mandataire: Gevers Patents
(86) Numéro de dépôt international: PCT/EP2022/077739
(87) Numéro de publication internationale: WO 2023/057529

(56) Documents cités:
- EP-A1- 2 511 252
- EP-A1- 2 918 353
- WO-A1-2004/050268
- CN-A- 107 827 508
- CN-U- 211 367 429
- KR-A- 20040 076 914
- DATABASE WPI Week 202007, Derwent World Patents Index; AN 2020-859426, XP002806827
- DATABASE WPI Week 200506, Derwent World Patents Index; AN 2005-055392, XP002806828
- DATABASE WPI Week 201826, Derwent World Patents Index; AN 2018-24349X, XP002806829

## Description

### Domaine technique

La présente invention concerne un composteur, et plus particulièrement un composteur domestique de déchets organiques.

### Art antérieur

La gestion des déchets ménagers représente un réel défi environnemental. Chaque jour, des tonnes de déchets sont enfuis ou incinérés dans le monde. Pour réduire l'emprunte environnementale de ces déchets, le compostage des déchets qui, parmi ces déchets ménagers, sont organiques (par exemple, des déchets de cuisine, des déchets de jardin, ...) est une solution connue et efficace. En effet, ce type de déchets ménagers représente en général 50% d'une poubelle ménagère européenne.

Du point de vue domestique, cette solution s'implémente typiquement sous la forme de tas de déchets organiques dans un jardin ou de bacs extérieurs dans lesquels sont placés les déchets organiques.

Force est de constaté que peu de particuliers adoptent cette solution car, à ce jour, en Europe, plus de 80% des déchets organiques sont finalement enfouis ou incinérés, ce qui engendre une pollution environnemental totalement évitable.

Il est dès lors nécessaire de fournir une solution plus attractive, plus simple et plus accessible aux particuliers pour composter des déchets organiques.

### Exposé de l'invention

Un objet de la présente invention est de fournir un composteur domestique de déchets organiques qui soit à la fois plus simple d'utilisation et plus efficace que les composteurs connus de l'art antérieur. Des composteurs domestiques sont connus de CN211367429U.

Dans ce but, la présente invention propose un composteur domestique de déchets organiques selon la revendication 1 comprenant :
- une entrée pour recevoir des déchets organiques ;
- un broyeur pour broyer les déchets organiques, couplé à un premier actionneur ;
- une cuve surmontée par le broyeur et agencée pour contenir les déchets organiques broyés par le broyeur ;
- un mélangeur agencé dans la cuve pour mélanger (et aérer) les déchets organiques broyés contenus dans la cuve, couplé à un deuxième actionneur ;
- une sortie agencée au niveau d'un fond de la cuve pour récupérer un terreau produit par compostage des déchets organiques contenus dans la cuve.

Le composteur est en outre typiquement muni d'un système d'aération ayant :
- une entrée d'air surmontant au moins partiellement la cuve et
au sein de laquelle est agencé un ventilateur
- des orifices de circulation d'air dans la cuve, au niveau du fond de la cuve ;
- une sortie d'air, préférentiellement couplée fluidiquement aux orifices ;

Ce système d'aération est alors configuré pour générer une circulation d'air dans la cuve, de l'entrée d'air, vers la sortie d'air, via les orifices.

Le composteur selon l'invention est particulièrement simple à utiliser. Il suffit en particulier d'insérer des déchets organiques dans l'entrée, d'actionner selon les besoins le broyeur et/ou le mélangeur (lorsqu'ils ne sont pas automatisés), et de récupérer le terreau ainsi obtenu après un certain temps. Le broyeur surmontant la cuve, les déchets organiques broyés tombent tout simplement dans la cuve par gravité, sans autre apport technique, et sont ensuite mélangés et aérés grâce au mélangeur. Le broyeur et le mélangeur permettent une transformation rapide des déchets organiques en terreau, de sorte que le composteur est bien plus efficace que les techniques de compostage extérieure de base connues de l'art antérieur. Le terreau peut ensuite être aisément récupéré par la sortie et utilisé dans des applications diverses, par exemple pour alimenter des plantes d'intérieur, de sorte que les déchets organiques compostés par le composteur sont ainsi valorisés.

De façon simple, la cuve permet de confiner les déchets organiques, sans encombrement dans des conditions d'hygiène et de propreté optimales, les seuls accès à l'intérieur du composteur consistant de préférence en l'entrée et la sortie. Le composteur peut ainsi être placé aisément et sans nuisance dans un lieu de vie fréquenté d'une habitation, par exemple, au moyen d'une suspension murale. Il ne nécessite en particulier pas d'accès à un jardin, de sorte qu'il convient aussi à un appartement. En particulier, de par sa nature « domestique », le composteur selon l'invention est tout spécifiquement adapté et/ou dimensionné pour être placé dans une pièce de vie d'une habitation ou d'une communauté, par exemple, une cuisine.

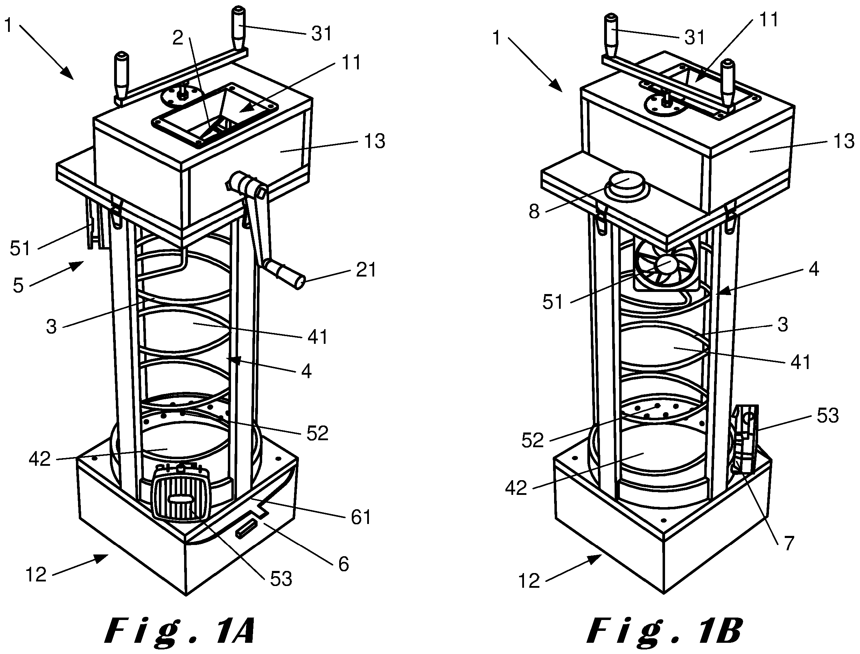

Le système d'aération joue en outre un rôle avantageux : il permet d'aérer le compost dans la cuve, et donc d'accélérer le compostage, de sorte que le terreau peut être créé et récupéré plus rapidement. Le composteur selon les modes de réalisation illustrés aux figures 1 à 10B ci-après introduites permet de la sorte de transformer les déchets organiques en terreau en à peine deux mois environ.

Le ventilateur permet une aspiration d'air de l'extérieur du composteur, vers l'intérieur de la cuve. Il peut fonctionner sur base d'une alimentation électrique, par exemple à une tension de 12V et avec une intensité de 1A, par exemple avec une batterie ou par connexion au réseau électrique.

L'entrée d'air surmonte au moins partiellement la cuve. Le ventilateur est ainsi de préférence placé en haut de la cuve, ou plus haut que la cuve. Par exemple, il peut être agencé au niveau d'une paroi latérale de la cuve, de façon à surmonter au moins une partie de la cuve. Il peut également surmonter totalement la cuve et être maintenu par une paroi supérieure du composteur. Le fait qu'il soit en haut de la cuve et que les orifices de circulation d'air soient en bas de la cuve, au niveau du fond de la cuve, est très avantageux pour assurer une circulation d'air dans toute la cuve, du haut vers le bas. Très préférentiellement, l'air qui pénètre dans la cuve par l'entrée d'air ne peut en ressortir que par la sortie d'air, via les orifices, de sorte que le système de circulation d'air guide au final la circulation d'air dans la cuve. L'air circulant dans la cuve traverse ainsi tous les déchets organiques broyés et le terreau (en formation éventuelle), ou en d'autres termes, le compost, dans la cuve pour y amener de l'oxygène de façon contrôlée, et de la sorte rendre le compostage davantage efficace.

Il également avantageux que les orifices de circulation d'air soient prévus au niveau du fond de la cuve. En effet, le fond de la cuve est occupé généralement par du compost mature, sous forme de terreau. Dès lors, l'air traverse ce terreau, ce qui contribue à oxygéner le terreau tout en débarrassant l'air d'odeurs. En effet, le terreau agit comme un filtre naturel. Ainsi, les potentielles nuisances olfactives sont réduites lorsque l'air atteint la sortie d'air. Cela n'aurait pas été le cas si les orifices étaient prévus plus haut dans la cuve, là où il n'y a pas nécessairement de terreau. Il est par ailleurs à noter que les termes « au niveau du fond de la cuve » n'implique pas que les orifices sont dans le fond de la cuve, mais qu'ils sont situés dans un voisinage immédiat du fond de la cuve, dans la partie basse de celle-ci donc.

De préférence, la sortie d'air comprend un filtre d'air. Le filtre d'air contribue à filtrer une éventuelle odeur émanant de la cuve qui n'aurait pas été atténuée par le positionnement avantageux des orifices. Il comprend de préférence une boîte remplie de billes de charbon actif pour filtrer l'air passant dans la boîte.

Grâce à ces différents composants et leurs avantages, le composteur selon la présente invention permet de rendre plus attractif, plus accessible et plus aisé le compostage des déchets organiques pour les particuliers.

Dans le cadre du présent document, des termes introduisant des dispositifs génériques tels que « broyeur », « mélangeur », (ou ci-après « ventilateur ») sont à interpréter génériquement, sans aucune limitation à une conception structurelle particulière du dispositif. Les termes « broyeur », « mélangeur » et « ventilateur » devraient ainsi être interprétés réciproquement de la même façon que « moyens de broyage », « moyen de mélange » et « moyens de ventilation ».

Dans le cadre de ce document, le composteur s'étend de préférence le long d'un « axe du composteur » dirigé de la sortie vers l'entrée du composteur. L'axe est de préférence dit dirigé « du bas vers le haut ». Ainsi, de préférence, l'entrée est située plus haut que le broyeur, qui est situé plus haut que le mélangeur, qui est situé plus haut que la sortie. Le « fond » de la cuve est de même logiquement en bas de la cuve, comme le comprendrait légitimement l'homme du métier. L'axe est de préférence dirigé parallèlement à la force de pesanteur et dans un sens opposé à celle-ci.

Le terme « surmonter » (et ses dérivés) employé dans ce document indique par ailleurs, préférentiellement, une disposition d'un élément du composteur au-dessus d'un autre (selon ledit axe), donc plus haut qu'un autre, ce qui correspond à un usage habituel de ce terme, comme l'homme du métier le comprendrait.

De préférence, le « couplage fluidique » entre les orifices de circulation d'air et la sortie d'air consiste en une canalisation et/ou une tuyauterie et/ou un chemin particulier dans la cuve menant spécifiquement un fluide, de l'air en l'occurrence, de ces orifices vers la sortie d'air. Un tel couplage fluidique canalise de préférence la circulation d'air entre ces orifices et la sortie d'air au sein de la cuve.

Bien que l'exposé de l'invention concerne un composteur muni d'un système d'aération, l'homme du métier comprendra directement sans ambiguïté que celui-ci (et ces spécificités techniques) est préféré pour un composteur générique muni d'une entrée, d'un broyeur, d'une cuve, d'un mélangeur et d'une sortie comme indiqué en général ci-dessus. En particulier, le présent document sera considéré par l'homme du métier comme divulguant également un tel composteur générique en combinaison avec chacun des modes de réalisation exposés ci-après.

L'usage, dans ce document, du verbe « comprendre », de ses variantes, et de leurs conjugaisons, ne peut en aucune façon exclure la présence d'éléments autres que ceux mentionnés. De même, l'usage, dans ce document, de l'article indéfini « un », « une », ou de l'article défini « le », « la » ou « l' », pour introduire un élément n'exclut aucunement une présence d'une pluralité de ces éléments.

Les termes « premier », « deuxième », etc. sont, quant à eux, utilisés dans ce document exclusivement pour différencier linguistiquement des éléments, et ce sans impliquer un ordre entre eux, ni impliquer que ces éléments seraient distincts structurellement. Le cas spécifique où les premier et deuxième actionneurs sont au moins partiellement un même élément technique du composteur est d'ailleurs parfaitement envisageable dans le cadre de l'invention tel qu'introduit ci-après.

Selon un mode de réalisation préféré de l'invention, les premier et deuxième actionneurs sont manuels. Ce mode de réalisation est par ailleurs parfaitement en ligne avec le caractère domestique du composteur. En effet, étant donné que le composteur est dédié au compostage des déchets ménagers et organiques d'une poignée d'individus, il est parfaitement envisageable d'actionner manuellement le broyeur et le mélangeur car peu de déchets sont à composter. En particulier, une telle réalisation ne serait pas possible sur des composteurs industriels de grandes tailles. Ces actionneurs peuvent, par exemple, prendre la forme de manivelles à tourner ou à manipuler par un utilisateur du composteur, dans le but d'entraîner, par un couplage mécanique (par exemple, via un ou plusieurs axes mécaniques), le broyeur et/ou le mélangeur.

Les actionneurs sont de préférence exclusivement manuels. Ainsi, de façon avantageuse, aucune alimentation électrique ou électronique n'est nécessaire au fonctionnement du broyeur et du mélangeur, ce qui contribue à rendre davantage énergétiquement indépendant et écologique le composteur.

Alternativement, le premier et/ou deuxième actionneurs peuvent comprendre des moyens de motorisation pour qu'ils soient, à la fois manuels et motorisés au choix et en fonction des besoins de l'utilisateur. Ainsi, une personne âgée pourra broyer et mélanger ses déchets sans devoir développer de force manuelle, ou en développant une force manuelle réduite, selon que les moyens motorisés soient d'appoint ou non. De tels moyens motorisés sont connus d'un homme du métier. Ils sont, par exemple, un moteur électrique caché dans un pied de manivelle qui constitue un des actionneurs. Ces moyens motorisés peuvent fonctionner tant par batterie ou que via une alimentation électrique du réseau. Une alimentation par batterie ou une absence de moyens de motorisation des actionneurs a l'avantage supplémentaire de permettre de placer le composteur de façon quelconque dans un lieu de vie, sans devoir tenir compte des emplacements où une alimentation en électricité est possible.

Selon un mode de réalisation préféré, le composteur comprend un ensemble d'un ou plusieurs capteurs parmi :
- un capteur de température et/ou d'humidité d'un air dans la cuve ;
- un capteur de température et/ou d'humidité des déchets organiques broyés et/ou du terreau contenus dans la cuve ;
- un capteur d'une sélection de gaz de compostage dans la cuve ;
les capteurs étant configurés pour transmettre des données à une unité logique de traitement de données.

Le terme « unité logique de traitement de données » inclut de préférence toute unité logique informatisée apte à traiter des données des capteurs, et donc, par exemple, un ordinateur, un smartphone, un réseau informatique, ou de façon général n'importe quel appareil programmable. Le traitement effectif des données des capteurs se fait de préférence via un programme informatique, par exemple via une application smartphone.

Avantageusement, les capteurs permettent, de par la transmission de leurs données, de surveiller le compost dans la cuve, et notamment de vérifier qu'il est à des bonnes humidités et/ou températures, et/ou qu'il en va de même pour l'air (ambiant) au sein de la cuve, car ces paramètres affectent la vitesse et la qualité du compostage. Les capteurs permettent de façon plus générale de vérifier que le compostage se fait dans de bonnes conditions, et d'agir dessus si besoin via le broyeur et/ou le mélangeur, et/ou tout autre élément technique dont serait muni le composteur, afin de rétablir de telles conditions. Par exemple, des émissions de gaz susceptibles de causer des nuisances olfactives peuvent ainsi être anticipées. Les capteurs comprennent de préférence au moins un capteur de température et d'humidité de l'air dans la cuve et un capteur d'humidité des déchets organiques broyés et/ou du terreau contenus dans la cuve. Ils sont de préférences protégés par une structure au sein de la cuve ou dans son voisinage immédiat. Ils peuvent être ainsi assemblés dans une même structure, ou bien agencés dans la cuve en fonction des données qu'ils doivent capter.

De préférence, un ou plusieurs capteurs sont couplés électroniquement au ventilateur de façon à ce que la puissance du ventilateur dépende de la ou des données de sortie du ou des capteurs. Ce ou ces capteurs comprennent de façon préférée un capteur d'humidité d'un air dans la cuve et/ou d'humidité des déchets organiques broyés et/ou du terreau contenus dans la cuve. Par exemple, lorsque le composteur selon ce mode de réalisation est tel qu'il comprend un capteur d'humidité des déchets organiques broyés et/ou du terreau contenus dans la cuve, ce capteur est de préférence couplé électroniquement au ventilateur de sorte que la puissance du ventilateur dépende de la donnée de sortie du capteur. Une variation de la puissance du ventilateur peut être implémentée par exemple par une variation de tension d'une alimentation du ventilateur entre des bornes tels que 5 et 12V. La puissance du ventilateur dépend préférentiellement linéairement de la donnée d'humidité. Par exemple, au plus la donnée d'humidité correspond à une humidité élevée, et au plus la puissance induite sera grande. De plus, et de préférence, le ventilateur fonctionne en continu, seule sa puissance variant.

De préférence, lorsque le composteur comprend un ou plusieurs capteurs et un système d'aération tel que décrit ci-dessus, au moins une partie des capteurs (typiquement ceux qui mesurent des données au niveau de l'air circulant dans la cuve) sont agencés au niveau de la sortie d'air et entourés d'une cloison latérale adaptée pour guider la circulation d'air. L'air circulant dans la cuve est ainsi dirigé spécifiquement vers ces capteurs, grâce au système d'aération et à la cloison, de sorte que les données de ces capteurs ne concernent que l'air sortant de la cuve, dans la circulation d'air, et non de l'air ambiant à l'extérieur de la cuve. De cette façon, les données obtenues via ces capteurs sont d'autant plus précises et leur marge d'erreur est réduite. Dans ce cas, lorsque la sortie d'air comprend un filtre d'air, ce dernier est de préférence agencée en sortie de ces capteurs.

L'air circulant dans le système d'aération traverse alors de préférence et de façon successive une zone dans laquelle se situent ces capteurs, entourée de la cloison latérale, un filtre d'air tel que décrit ci-dessus, et puis une grille de sortie de la sortie d'air débouchant sur l'extérieur du composteur.

Deux réalisations préférées particulières du système d'aération compatibles chacune avec l'ensemble des considérations ci-dessus sont exposées ci-dessous, et sont implémentées respectivement dans les modes de réalisation préférés du composteur des figures ci-après introduites 1A à 4B, d'une part, et 5A à 10B, d'autre part. Le système d'aération n'est aucunement limité à ces deux réalisations dans le cadre de la présent invention.

Selon la première de ces réalisations, les orifices sont pratiqués dans une paroi latérale de la cuve, et la sortie d'air est adjacente à la paroi latérale, agencée au niveau du fond de la cuve.

Selon la deuxième de ces réalisations, les orifices sont pratiqués dans une partie basse d'un tube (creux) traversant la cuve, et la sortie d'air est adjacente à l'entrée d'air, et de préférence agencée au niveau de l'entrée du composteur.

Le tube s'étend de préférence du bas vers le haut de la cuve, selon l'axe du composteur. Il consiste, de préférence, et en relation avec un mode de réalisation ci-après introduit, en un axe mécanique couplé mécaniquement aux premier et/ou deuxième actionneurs et entrainant le broyeur et/ou le mélangeur. En effet, cette réalisation particulière permet d'agencer de façon simple et pratique le tube sans encombrer la cuve et sans entraver le mélangeur.

Dans ces deux réalisations, les orifices s'étendent de préférence selon l'axe du composteur sur 10% à 15% de la hauteur de la cuve (mesurée selon cet axe), par exemple environ 10 cm, comptés à partir du fond de la cuve. La paroi latérale ou le tube, selon la réalisation, comprennent de préférence un revêtement grillagé ayant un maillage serré au niveau des orifices afin de ne permettre sa traversée que par de l'air (et non du terreau). Ce revêtement permet notamment de faciliter la fabrication du composteur, car les orifices peuvent être réalisés avec des outils plus simples et être plus grands. Par exemple, ils ont un diamètre compris entre 1,5 et 2,5 mm, par exemple, environ 1,9 mm, alors que les trous du revêtement ont, par exemple, un diamètre de 0,1 à 0,25 mm, par exemple, environ 0,18 mm, et un diamètre de mailles, par exemple, d'environ 120 µm.

Cette première réalisation a l'avantage d'être simple à prévoir et de ne pas encombrer la cuve avec des éléments du système d'aération. De préférence, les orifices sont prévus sur toute une circonférence de la paroi latérale de la cuve, au niveau du fond de celle-ci. La sortie d'air peut alors correspondre à l'ensemble de cette circonférence, un revêtement grillagé et un filtre d'air pouvant être aisément prévus sur celle-ci. Alternativement, la sortie d'air peut sans limitation être définie comme étant spécifiquement au niveau d'une éventuelle cloison latérale entourant les capteurs.

La deuxième réalisation a l'avantage d'amener les éléments plus techniques du système d'aération (et potentiellement du composteur) au même niveau, de préférence sur une paroi supérieure surmontant complètement la cuve. Il est ainsi plus aisé d'entretenir ces éléments et de les remplacer en cas de défaillance que s'ils s'étendent dans l'ensemble du composteur. La taille de la cuve est également plus facilement modulable. En outre, un seul filtre d'air peut ainsi être agencé à la fois au sein de l'entrée d'air et de la sortie d'air, ce qui étend ses effets au niveau de l'entrée d'air, sans devoir prévoir deux filtres d'air, et deux entretiens y afférant.

Selon un mode de réalisation préféré de la présente invention, le fond de la cuve comprend une portion amovible apte à être déplacée pour permettre une récupération du terreau de la cuve dans un contenant. Il est possible de récupérer le terreau produit dans le composteur de façon particulièrement aisée par cette portion amovible. Son déplacement libère typiquement une ouverture dans le fond de la cuve à travers laquelle s'écoule le terreau. La sortie comprend typiquement cette portion amovible.

La récupération du terreau peut être mise en oeuvre de plusieurs façons. Par exemple, le contenant peut être un simple récipient qu'un utilisateur tient sous la portion amovible. Dans ce cas, de préférence, la portion amovible est couplée de façon mécanique à une poignée de déplacement de la portion amovible, et dont peut facilement se saisir l'utilisateur. De préférence, la portion amovible est bordé d'un joint pour garantir l'herméticité du fond de la cuve. La poignée et le joint font préférentiellement partie de la sortie.

Alternativement, le contenant peut être un tiroir coulissant surmonté et bordé par le fond de la cuve (et donc, se situant plus bas que le fond de la cuve) faisant partie intégrante du composteur, et facilitant dès lors son utilisation. Ainsi, lorsque la portion amovible est déplacée, le terreau tombe directement dans ce tiroir. Une fois que la portion amovible est remise en place, de façon à reconstituer le fond de la cuve, le tiroir peut coulisser et donner accès au terreau ainsi récupéré, de façon simple et propre. Dans ce cas, optionnellement le fond de la cuve consiste en la portion amovible, laquelle est de préférence coulissante et comprend une poignée permettant à un utilisateur de la faire coulisser. Le tiroir fait de préférence également partie de la sortie.

Selon un mode de réalisation préféré de l'invention, le composteur est muni d'une cartouche comprenant :
- une portion supérieure de support prenant appui sur une paroi supérieure du composteur et faisant saillie hors de la cuve,
- une portion inférieure contenant une composition insecticide, et
- une portion intermédiaire s'étendant de la portion supérieure et à la portion de support, et comprenant au moins une ouverture dimensionnée pour permettre le passage d'insectes, par exemple des mouches,
la portion intermédiaire (et optionnellement également la portion inférieure) étant en communication fluidique avec la cuve, et de préférence agencée dans la cuve. Le terme « paroi supérieure » fait de préférence référence à une paroi bordant le haut du composteur selon l'axe du composteur, et surmontant la cuve.

Le composteur selon ce mode de réalisation permet d'éviter la prolifération indésirable de mouches et autres insectes, typiquement des drosophiles, au sein du compost. En effet, les déchets organiques introduit dans le composteur sont susceptibles de comprendre des œufs d'insectes ou des insectes, typiquement des oeufs de drosophiles, qui trouvent dans la cuve des conditions de température et d'humidité idéales pour se développer. Ces insectes ne représentent pas de nuisance directe car ils sont enfermés dans la cuve. Il est cependant préférable de les éliminer, ce que permet la cartouche susdite.

En pratique, la cartouche est aisément remplaçable en manipulant la portion supérieure qui peut être soulevée manuellement pour retirer la cartouche, et peut être replacée en prenant appui sur la paroi supérieure du composteur. De façon alternative, la cartouche peut être fixée sur la paroi supérieure du composteur et son contenu accessible via un couvercle. Il est ainsi aisé de la remplir à nouveau de composition insecticide. Comme la portion intermédiaire est en communication fluidique avec la cuve, les insectes présents dans le compost peuvent accéder à la portion intermédiaire et de préférence à la portion inférieure au sein desquels ils sont tués par la composition insecticide.

La composition comprend de préférence un attracteur d'insectes, tel que du vinaigre, et un suppresseur de tension superficielle tel qu'une huile ou un savon liquide, pour faire couler les insectes attirés par l'odeur du vinaigre qui tenterait de boire la composition insecticide. Avantageusement, cette composition est simple à fabriquer et peu coûteuse, tout en étant parfaitement écologique et naturelle.

Selon un mode de réalisation général préféré de l'invention, le composteur comprend une enceinte surmontant la cuve et abritant et/ou bordant le broyeur, l'entrée comprenant un passage pratiqué dans l'enceinte, de telle sorte que les déchets organiques reçus par l'entrée pénètrent dans l'enceinte préalablement à leur broyage par le broyeur. L'enceinte permet à la fois de stocker davantage de déchets organiques à broyer, et typiquement d'introduire des déchets organiques sans devoir nécessairement tous les broyer directement. L'enceinte joue aussi un rôle protecteur au regard de l'utilisateur. En effet, le broyeur abrité et/ou bordé par l'enceinte pourrait blesser l'utilisateur. L'enceinte joue aussi un rôle esthétique car elle cache de la vue de l'utilisateur le broyeur et les déchets, en particulier durant l'opération de broyage des déchets organiques. Elle évite enfin les projections de déchets lors de cette opération.

De préférence, des moyens de mélange (en d'autres termes, un deuxième mélangeur) sont agencés dans l'enceinte pour mélanger les déchets organiques contenus dans l'enceinte. Ces moyens surmontent de préférence le broyeur. Ils permettent de façon avantageuse un mélange et une aération préliminaires des déchets organiques à broyer, en début de compostage, typiquement lorsque ces déchets organiques restent plusieurs jours dans l'enceinte. Ils permettent aussi de faire descendre du haut vers le bas de l'enceinte les déchets organiques, vers le broyeur, pour qu'ils soient broyés et descendent ensuite dans la cuve.

Les moyens de mélange peuvent prendre, par exemple, la forme d'une pale rotative comprenant une ou plusieurs extensions transverses à la pale. De façon générale, ils peuvent être implémentés de la même façon que le mélangeur, voire constitués une extension au mélangeur connectée au deuxième actionneur pour actionner à la fois le mélangeur et les moyens de mélange. De façon alternative, les moyens de mélange peuvent être couplés de façon mécanique à un troisième actionneur distinct du deuxième actionneur, et optionnellement formant une même pièce mécanique avec le premier actionneur.

Selon un mode de réalisation préféré de l'invention, les premier et deuxième actionneurs sont formés d'une même pièce mécanique couplée mécaniquement à un axe mécanique, de préférence rotatif, apte à entraîner à la fois le broyeur et le mélangeur. L'axe du composteur est de préférence parallèle à l'axe mécanique. L'axe mécanique traverse de préférence la cuve de bas en haut, en son centre.

Ce mode de réalisation est avantageux car un seul actionneur met en action à la fois le broyeur et le mélangeur, ce qui facilite tant l'utilisation que la fabrication du composteur. En outre, dans le cas d'un axe mécanique rotatif couplé de façon mécanique à une manivelle manuelle, il suffit de tourner la manivelle pour mettre en action le broyeur et le mélangeur, sans nécessiter une grande force.

Lorsque le composteur comprend en outre un système d'aération comme dans la deuxième réalisation introduite ci-dessus, le tube creux traversant la cuve n'est de préférence d'autre que l'axe mécanique, ce qui simplifie significativement la réalisation de l'invention et diminue l'encombrement de la cuve.

De préférence, lorsque l'axe mécanique traverse au moins partiellement la cuve, au moins un pied est fixé à l'axe mécanique et s'étend transversalement de l'axe mécanique au fond de la cuve, dans la cuve. De préférence, au moins deux tels pieds sont prévus, et agencés symétriquement dans la cuve. Ils sont apte à tourner dans la cuve lorsque l'axe mécanique est rotatif. De tels pieds permettent une meilleure aération du compost (ou du terreau) au niveau du fond de la cuve. Ils permettent également de manipuler le compost (ou le terreau) via la sortie s'il est trop dense ou trop compact. Dans le cadre de ce document, le terme « pied » n'est pas à interpréter comme un support inférieur car un tel pied n'a typiquement pas de fonction de support de l'axe mécanique sur le fond de la cuve en tant que tel. Le terme « pied » est utilisé pour faire simplement référence à une « extension à l'axe mécanique dirigée vers le fond de la cuve ». Ces termes peuvent d'ailleurs être interchangés dans le cadre de ce document.

Selon un mode de réalisation de l'invention, une structure mécanique pour la fixation murale du composteur est prévue sur la paroi latérale de la cuve. Dans ce cas, au moins un élément mécanique de rigidité est préférentiellement prévu pour coupler mécaniquement (par exemple, via des paliers) la structure mécanique et l'axe mécanique, de façon à stabiliser et accroître la rigidité du composteur.

Deux réalisations pratiques et préférées à la fois du broyeur et du mélangeur du composteur selon l'invention sont maintenant présentées, chaque réalisation de l'un étant compatible avec une réalisation de l'autre.

Selon une première réalisation du broyeur, il comprend des lames agencées sur des roues dentées partiellement superposées et orientées vers la cuve. Les roues dentées sont préférentiellement enfermées dans un boîtier et couplées au premier actionneur via un engrenage et un axe mécanique pour être entraînées en rotation. Les déchets organiques sont ainsi broyés par leur écrasement au niveau des roues dentées en rotation, ce qui permet avantageusement de réduire leur volume et d'augmenter la surface accessible aux microorganismes utiles au compostage. L'orientation des roues dentées entraine en outre les déchets vers le bas, donc vers la cuve, ce qui facilite le fonctionnement du composteur.

Il est possible d'actionner la rotation des roues dentées dans le sens opposé (par exemple, en tournant une manivelle constituant le premier actionneur dans le sens opposé) pour débloquer des déchets organiques qui seraient bloqués entre les roues dentées.

Selon une deuxième réalisation distincte du broyeur, il comprend une lame rotative surmontant une grille bordant la cuve. Cette grille est adaptée pour retenir des déchets organiques trop volumineux, de sorte que ceux-ci sont coupés par la lame lorsqu'elle est mise en rotation, c'est-à-dire de préférence, via le premier actionneur. La grille a, par exemple, les trous de maillage entre 1 cm et 2,5 cm de diamètre, de préférence de 1,5 ou 2 cm de diamètres, ce qui permet le passage de déchets comme des noyaux, sans endommager la lame. Un tel diamètre est adapté de sorte que les déchets trop gros pour être compostés efficacement sont retenus par la grille et coupés par la lame, sans pour autant systématiquement couper tous les déchets organiques introduits dans le composteur, ce qui pourrait créer des agglomérats de petits déchets organiques dans la cuve et y empêcher la circulation de l'oxygène. De façon avantageuse, cette deuxième réalisation du broyeur est simple à fabriquer et à actionner, en particulier, lorsque seule la lame est à mettre en rotation. La grille et la lame s'étendent préférentiellement de façon perpendiculaire à l'axe du composteur. La lame s'étend de préférence le long d'un diamètre de section (transverse) du composteur.

De préférence, le broyeur comprend deux telles lames, de préférence ni plus ni moins. De préférence, chaque lame est bidirectionnelle, ce qui permet de faire tourner la lame dans un sens ou l'autre, et donc de dégager plus facilement des éventuels déchets organiques qui seraient bloqués dans le broyeur. Chaque lame présente de préférence un bord extrémal coupant arrondi, ce qui permet d'induire un meilleur effet de cisaillement et donc une meilleure coupe des déchets dans le broyeur. Ce bord arrondi induit en outre un mouvement latéral (vers l'intérieur ou l'extérieur) des déchets dans le broyeur, facilitant leur blocage contre une paroi du broyeur et donc la coupe ou le broyage de ces déchets.

De préférence, la lame du broyeur est enfermée (axialement) entre la grille et une structure de division des déchets organiques à broyer, surmontant la lame. La structure de division prend de préférence la forme de deux ou trois secteurs circulaires s'étendant de façon perpendiculaire à l'axe du composteur. Elle permet de diviser la masse de déchets organiques à broyer et de faciliter cette opération.

Selon une première réalisation du mélangeur, celui-ci comprend un fil rigide hélicoïdal s'étendant autour d'un axe d'hélicoïde, dimensionné pour être déplacé dans la cuve en rotation autour de l'axe d'hélicoïde et/ou parallèlement à l'axe d'hélicoïde au moyen du deuxième actionneur. De préférence, l'axe d'hélicoïde correspond à l'axe du composteur, l'hélicoïde s'étendant du bas vers le haut de la cuve. Ce mélangeur est de préférence utilisé en trois mouvements. Tout d'abord, il est soulevé le long de l'axe d'hélicoïde pour extraire une carotte de compost dans la cuve. Ensuite, il est secoué légèrement le long de l'axe d'hélicoïde pour faire retomber le compost de la carotte dans la cuve. Le deuxième actionneur est de préférence manuel pour ces opérations, de sorte que, de façon avantageuse, un utilisateur peut sentir le poids du compost initialement porté par le mélangeur diminué lorsqu'il retombe dans la cuve, sachant ainsi quand débuter le troisième mouvement. Celui-ci consiste en le replacement du mélangeur dans sa position initiale. Pour cela, le fil rigide hélicoïdal est enfoncé en rotation dans le compost, ou en d'autres termes, il est vissé, le long de l'axe d'hélicoïde, et ce pour pénétrer plus facilement dans le compost. Le mélangeur permet ainsi d'homogénéiser les déchets organiques broyés, de sorte que terreau produit par leur compostage soit de très bonne qualité.

Cette première réalisation du mélangeur est particulièrement avantageuse car elle est permet de préserver les couches des déchets organiques (créées au fil de leur introduction dans le composteur) à différents stades de décomposition. Ceci a deux avantages majeurs. D'une part, cela permet de respecter la cultures des microorganismes utiles au compostage qui varient par couche selon le stade de décomposition. D'autre part, comme le fond de la cuve abrite du compost mur sous la forme de terreau, ou du moins est destiné à en contenir, il est souhaitable de ne pas mélanger ce terreau avec des déchets organiques à un stade antérieur de décomposition, et ce afin que le terreau à la sortie soit pur. Ce mélangeur est avantageusement adapté à cet effet.

Le fil rigide hélicoïdal est préférentiellement constitué d'acier inoxydable et il est de préférence prolongé d'un fil rigide rectiligne (ou du moins fixé à un tel fil, par exemple, par l'intermédiaire d'une spire déformée prolongeant elle-même le fil rigide hélicoïdal) du même matériau s'étendant parallèlement à l'axe d'hélicoïde partiellement dans la cuve, et ce dans le but de permettre le déplacement du fil rigide hélicoïdal, dans la cuve, selon l'axe d'hélicoïde. Ces fils sont de préférences d'une section transverse lisse et régulière, de façon à ne pas couper et/ou broyer les déchets organiques dans la cuve, mais simplement à les aérer et mélanger, par couche, pour les raisons exposées ci-dessus. Cette section transverse est de préférence essentiellement constante et/ou circulaire.

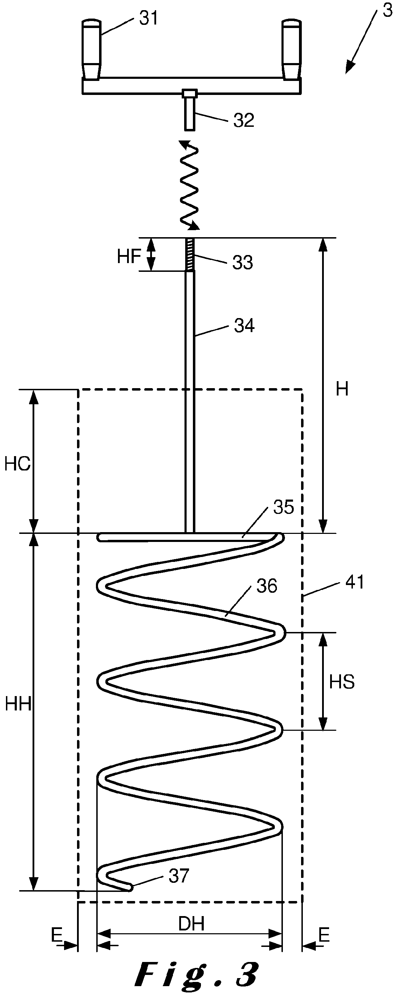

Des paramètres géométriques de ces éléments mécaniques sont discutés ci-après au regard de la figure 3. Lorsque le composteur comprend la deuxième réalisation du système d'aération introduite ci-dessus, le fil rigide s'étendant selon l'axe hélicoïdal, peut être substitué à une portion du tube creux traversant la cuve se prolongeant au coeur de l'hélicoïde. Le tube creux peut en outre être employé comme axe mécanique tel qu'exposé ci-dessus.

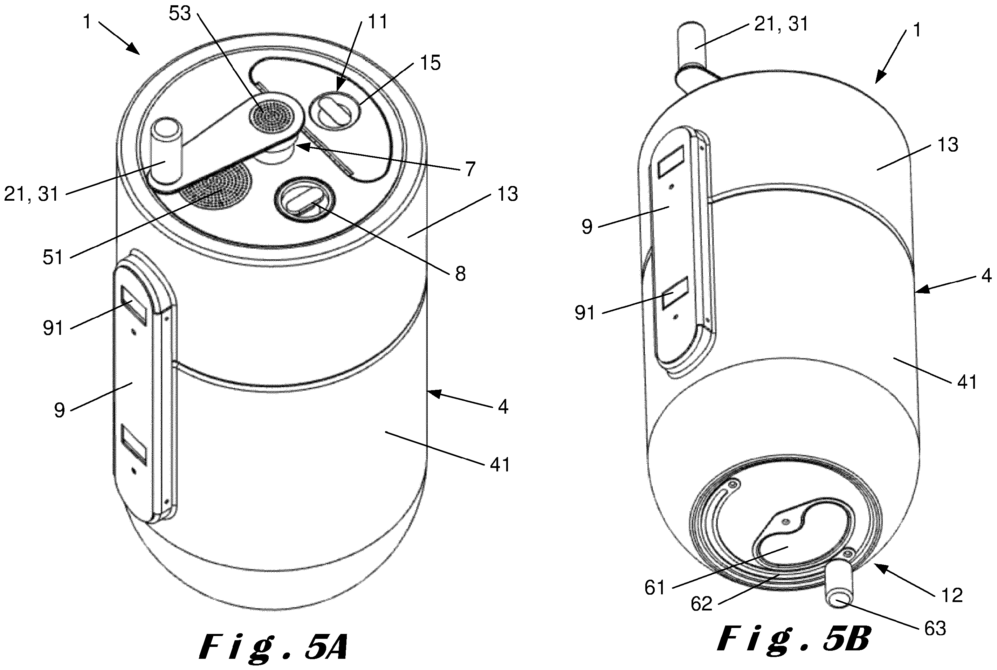

Selon une deuxième réalisation distincte du mélangeur, celui-ci comprend (au moins) une pale (rotative). Cette pale est préférentiellement portée par un axe mécanique rotatif traversant la cuve, et s'étend orthogonalement à celui-ci. L'axe mécanique s'étend de préférence le long de l'axe du composteur, de sorte qu'il est dirigé de la sortie vers l'entrée. De préférence, l'axe mécanique entraine la pale via le deuxième actionneur. De préférence, l'axe mécanique correspond à celui d'un des modes de réalisation introduits ci-dessus, comme il est illustré au regard des figures 5A à 9 ci-après introduites. Ainsi, cet axe mécanique peut constituer en le tube creux de la deuxième réalisation du système d'aération susdite lorsque le composteur en comprend. Le terme d'« axe mécanique » utilisé dans la formulation de cette deuxième réalisation du mélangeur n'est toutefois pas limité à ces réalisations particulières exposées ci-dessus. La pale s'étend de préférence de part et d'autre de la cuve, de sorte qu'elle la traverse.

Cette deuxième réalisation est simple à fabriquer et à industrialiser. Elle est également simple à faire fonctionner car il suffit de faire tourner la pale au moyen du deuxième actionneur. Le poids de compost à mouvoir au moyen du mélangeur est faible vu qu'il correspond à une couche de compost au niveau de la pale. Dès lors, il est rendu particulièrement aisé pour un utilisateur de mettre en mouvement le mélangeur au moyen d'une deuxième actionneur manuel, sans devoir exercer une grande force au niveau de ce deuxième actionneur.

Etant donné que la pale est agencée orthogonalement à l'axe mécanique dirigé du bas vers le haut, sa rotation va mettre en mouvement une couche du compost sans casser la structure de couche de celui-ci, ce qui est avantageux pour les mêmes raisons que discutées ci-dessus au regard de l'autre réalisation du mélangeur. En outre, de par son mouvement rotatif, la pale induit la libération d'espace pour une circulation d'air dans une couche correspondante de compost, de sorte qu'une bonne homogénéisation et aération du compost est prodiguée. Ceci permet la production d'un terreau de bonne qualité.

De préférence, le mélangeur selon cette deuxième réalisation comprend au moins deux telles pales. Chaque pale est préférentiellement positionnée dans la moitié ou les deux tiers de la cuve la plus proche de l'entrée, afin de réduire les risques de mélange du compost mur sous forme de terreau avec d'autres déchets organiques à un stade de décomposition moins avancé. Avantageusement, un ou des pieds peuvent être fixés à l'axe mécanique et s'étendre transversalement de l'axe mécanique au fond de la cuve, dans la cuve, afin de permettre une aération spécifique de ce terreau, comme décrit précédemment au regard d'un autre mode de réalisation de l'invention.

De préférence, la pale est munie d'une ou plusieurs extensions qui lui sont transverses. Ces extensions peuvent prendre la forme de plus petites pales, d'une longueur entre environ 10 à 40%, par exemple, entre 10 et 20%, d'une longueur de la pale. Dans ce cas, la « longueur » est de préférence la plus grande dimension spatiale de la pale et des extensions. Les extensions permettent avantageusement d'augmenter la surface de contact du mélangeur avec les déchets organiques dans la cuve. La taille de ces extensions est telle qu'elles sont suffisamment petites pour ne pas casser les couches du compostage tel que discuté ci-dessus, et suffisamment grandes pour obtenir une homogénéisation et aération adéquates des déchets organiques. En outre, il est avantageux de limiter la taille des extensions pour limiter l'énergie nécessaire au niveau du deuxième actionneur afin d'entraîner le mélangeur.

De préférence, chaque extrémité de la pale comprend une telle extension. Cela permet d'accroître la surface de contact de la pale avec le compost au bord de la cuve, et donc d'améliorer encore l'aération de celui-ci. Plus précisément, de préférence, l'extension prolonge une extrémité libre de la pale et est orientée de la sortie vers l'entrée à partir de la pale selon un plan sécant à la pale formant un plus petit angle avec elle compris entre 90° et 160°, préférentiellement entre 130° et 160°, par exemple, environ 145°. En d'autres termes, l'extension est orientée du bas vers le haut selon l'inclinaison susdite. Un mélangeur muni de ces pales reste particulièrement facile à fabriquer et permet de mélanger les déchets dans la cuve autour de l'axe mécanique en leur donnant une incidence verticale, « vers le haut », et ce de façon à les aérer adéquatement, en particulier, en synergie avec l'avantageux système d'aération utilisé. Pour ce faire, comme indiqué ci-dessus, il n'est pas nécessaire de prévoir des extensions de grandes dimensions. Par exemple, leur longueur projetée sur l'axe mécanique est comprise entre 1,0 et 2,5 cm, par exemple 1,5 cm, ce qui limite la résistance des déchets sur les extensions, et l'énergie à déployer pour mettre en mouvement le mélangeur, en particulier lorsque ledit plus petit angle est compris entre 130° et 160°.

Selon une réalisation, les pales s'étendent à partir de l'axe mécanique vers une extrémité libre essentiellement perpendiculairement à l'axe mécanique. Elles sont agencées en séquence le long de l'axe mécanique, et sont décalée l'une par rapport à l'autre selon la séquence d'un même angle. De préférence, le nombre de pales correspond à la partie entière supérieure du quotient de 360° par cet angle. Par exemple, ce nombre est de 4 si l'angle est de 90°. Avantageusement, cette réalisation « en escalier » du mélangeur est simple à mettre en oeuvre et offre un très bon ratio entre les efforts à fournir pour mettre en mouvement le mélangeur et l'effet de mélange procuré par préservation des couches.

Chacune des présentes considérations concernant la deuxième réalisation du mélangeur s'étendent directement aux moyens de mélange étant introduits ci-dessus lorsque le composteur en comprend. Ceux-ci prennent de préférence une même forme et sont entraînés par le même axe mécanique que le mélangeur.

### Brève description des figures

D'autres caractéristiques et avantages de la présente invention apparaîtront à la lecture de la description détaillée qui suit pour la compréhension de laquelle on se reportera aux figures annexées parmi lesquelles :
- les figures 1A et 1B illustrent des vues globales extérieures latérales du dessus d'un composteur selon un premier mode de réalisation de l'invention ;
- les figures 2A, 2B et 2C illustrent des vues du dessus, en coupes superposées et globale d'un broyeur du composteur illustré aux figures 1A et 1B ;
- la figure 3 illustre une vue de côté d'un mélangeur du composteur illustré aux figures 1A et 1B et des pièces mécaniques auxquels il est associé et couplé ;
- les figures 4A et 4B illustrent des vues extérieures d'une sortie du composteur illustré aux figures 1A et 1B, comprenant un fond amovible d'une cuve ainsi qu'un tiroir de récupération de terreau ;
- les figures 5A et 5B illustrent des vues globales extérieure, d'une part, latérale et du dessus, et d'autre part, latérale et du dessous, d'un composteur selon un deuxième mode de réalisation de l'invention ;
- les figures 6A et 6B illustrent des vues de côté intérieures, avec et sans une paroi d'une enceinte, du composteur illustré aux figures 5A et 5B ;
- la figure 7 illustre une vue intérieure d'un broyeur du composteur illustré aux figures 5A et 5B, et de son voisinage ;
- la figure 8 illustre une vue intérieure, latérale et du dessous, du composteur illustré aux figures 5A et 5B ;
- la figure 9 illustre une vue globale latérale d'un mélangeur pour le composteur selon le deuxième mode de réalisation susdit ;
- les figures 10A et 10B illustrent deux vues latérales du dessus d'une pale du mélangeur illustré en figure 9.

Les dessins des figures ne sont pas à l'échelle. Des éléments semblables sont en général dénotés par des références semblables dans les figures. Dans le cadre du présent document, les éléments identiques ou analogues peuvent porter les mêmes références. Par exemple, le fil rigide hélicoïdal dudit premier mode de réalisation porte la même référence que les pales rotatives dudit deuxième mode de réalisation étant donné que ce sont des parties des mélangeurs respectifs des composteurs de ces modes de réalisation jouant le même rôle, et ce même si ces parties sont structurellement différentes.

En outre, la présence de numéros ou lettres de référence aux dessins n'est pas à considérer comme étant limitative, y compris lorsque ces numéros ou lettres sont indiqués dans les revendications.

### Description détaillée de modes de réalisation de l'invention

Cette partie présente une description de deux modes de réalisation préférés de l'invention sur base de réalisations particulières et de références numériques aux figures 1 à 10B sans être limitée par celles-ci. En particulier, les dessins des figures décrites ci-dessous ne sont que schématiques et ne sont pas limitants.

Un premier mode de réalisation du composteur 1 selon l'invention est décrit au regard des figures 1A à 4B. Un deuxième mode de réalisation du composteur 1 selon l'invention est décrit au regard des figures 1 à 10B. L'entrée 11, la sortie 12, le broyeur 2, le mélangeur 3 et le système d'aération, par exemple, sont au moins en partie distincts selon ces deux modes de réalisation. Comme il apparaîtra de façon évidente de l'exposé de l'invention pour l'homme du métier, généralement, les réalisations spécifiques de ces éléments techniques du composteur 1 sont tout à fait interchangeables entre ces deux modes de réalisation.

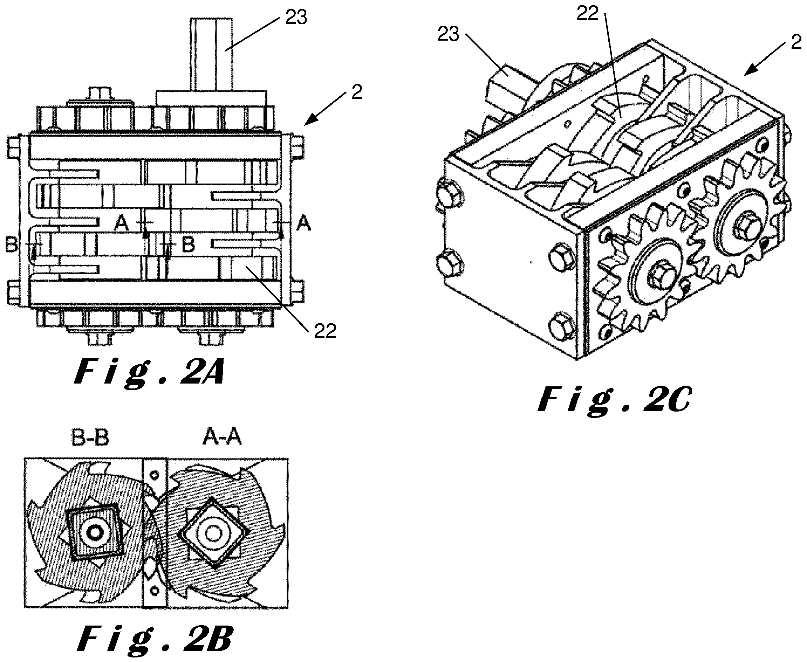

Le premier mode de réalisation est représenté globalement aux figures 1A à 1B. Ce composteur 1 comprend une enceinte 13 dans laquelle est pratiqué un passage définissant une entrée 11 par laquelle peuvent être introduit des déchets organiques. Le passage peut être en forme conique et/ou adapter pour y poser un entonnoir. Un couvercle (non représenté) peut être agencé dans le passage pour le recouvrir et ce pour des raisons esthétiques et hygiéniques. L'enceinte 13 abrite un broyeur 2 représenté en figure 2 et couplé à un premier actionneur 21. Le premier actionneur 21 prend la forme d'une manivelle à tourner, qui est implantée latéralement sur l'enceinte 13.

Les figures 2A, 2B et 2C illustre plus précisément le broyeur 2. Il comprend cinq roues dentées 22 portant des lames sous la forme d'extrémité pointues des roues dentées 22. Le nombre de roues dentées 22 n'est bien sûr pas limité à cinq. Elles sont assemblées dans un boîtier et couplées mécaniquement audit premier actionneur 21 via un mécanisme 23 réalisable de diverses façons connues (par exemple, via un engrenage et/ou un axe). Les roues dentées 22 se superposent partiellement comme illustré en figure 2B. Le premier actionneur 21 permet alors de les entraîner en rotation en sens contraire deux à deux, de sorte que les déchets organiques sont broyés, coupés et entraînés vers le bas, dans une cuve 4 de compostage visible en figures 1A et 1B. Les roues dentées 22 sont de taille telle que les déchets organiques sont coupés à environ 1,5 cm d'épaisseur. Cette donnée est un compromis entre la nécessité de couper des déchets organiques trop gros pour être compostés efficacement, et le fait de ne pas avoir des déchets organiques trop petits dans la cuve qui créerait des agglomérats et empêcherait la circulation de l'oxygène dans la cuve 4.

Comme il est visible en figures 1A et 1B, la cuve 4 est cylindrique. Elle a par exemple un diamètre de 30 cm, une hauteur axiale de 90 cm et un volume en compost d'environ 50 litres. Tant la forme que les dimensions que la capacité de la cuve sont modulables selon les besoins domestiques, sans affecter d'aucune façon le fonctionnement du composteur. Ces données peuvent s'appliquer aussi au deuxième mode de réalisation du composteur ci-après commenté. La cuve 4 dans le cadre de la présente invention est néanmoins de préférence cylindrique de façon générale pour présenter une forme lisse et symétrique autour d'un axe facilitant à la fois la conception de la cuve et l'agencement d'éléments techniques en son sein, et offrant une paroi latérale 41 lisse au compost dans la cuve 4, ce qui lui permet de glisser progressivement vers le bas de la cuve 4, sans créer d'amalgames dans des points anguleux éventuels de celle-ci. Dans le cas des figures 1A et 1B, la cuve est représentée comme étant transparente, ce qui facilite la visualisation du compost à l'intérieur pour un utilisateur.

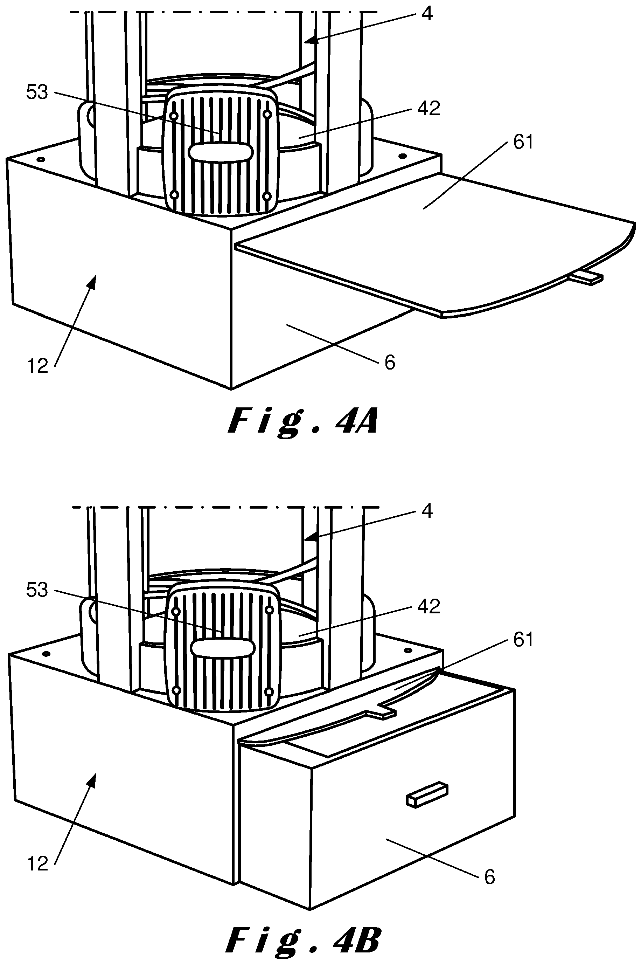

Les déchets organiques broyés tombent ainsi par gravité dans la cuve 4. Le compost mûr formera du terreau au niveau d'un fond 42 de la cuve 4 étant donné que c'est là où sont les déchets organiques broyés les plus anciens et donc à un stade plus avancé de compostage. Comme il est visible en figures 4A et 4B, le fond 42 de la cuve 4 consiste en une plaque amovible 61 munie d'une poignée qui peut être coulissée. Cette plaque amovible 61 surmonte un contenant 6 consistant en un tiroir coulissant de récupération du terreau. Ainsi, un utilisateur peut récupérer aisément et proprement du terreau produit dans la cuve 4 en tirant la plaque amovible 61 pour laisser tomber du terreau dans le tiroir, en replaçant la plaque amovible 61 pour éviter que la colonne de déchets organiques dans la cuve 4 ne s'effondre ou ne s'échappe, et en ouvrant ensuite le tiroir pour accéder au terreau. Par exemple, le tiroir peut se détacher complètement du bas de la cuve 4 pour permettre le déplacement aisé du terreau avant son utilisation. Ces moyens techniques définissent une sortie 12 du composteur 1.

Pour permettre une homogénéisation et une aération adéquate des déchets organiques broyés dans la cuve 4, un mélangeur 3 est agencé en son sein. Il est couplé de façon mécanique à un deuxième actionneur 31 prenant la forme d'une manivelle à une double poignées, et ce afin de pouvoir manipuler plus facilement le mélangeur 3 et le poids éventuel qu'il porte.

Le mélangeur 3 est décrit en détail au regard de la figure 3. Il comprend un fil rigide hélicoïdal 36 en acier inoxydable dont l'axe d'hélicoïde correspond à un axe de révolution de la cuve 4, définissant un axe du composteur 1. Le mélangeur 3 a un diamètre (ou largeur) DH plus petit que celui de la cuve 4, définissant de façon symétrique un espace E entre le mélangeur 3 et la paroi latérale 41 de la cuve 4. Le diamètre de la cuve 4 est déterminé pour avoir une hauteur acceptable et un volume total assez grand, tandis que l'espace E est déterminé pour limiter la quantité de déchets organiques qui ne sont pas mélangés (et éviter une formation d'amalgames sur la paroi latérale 41), sans pour autant induire de friction entre le mélangeur 3 et la paroi latérale 41 via les déchets organiques car une telle friction nécessiterait de manipuler le mélangeur avec plus de force. En outre, le diamètre DH en tant que tel est choisi pour ne pas accroître de façon excessive le poids du mélangeur, tout en mélangeant une quantité de déchets organiques suffisante.

Le fil rigide hélicoïdal 36 définit, par exemple, de 3 à 6 spires, chacune ayant une hauteur de spire HS constante assez grande pour ne pas induire un poids trop grand au niveau du mélangeur ni au niveau des déchets organiques capturés par ces spires, mais également assez petite pour limiter l'effet élastique de ressort du fil rigide hélicoïdal 36, de façon à ce que le poids des déchets organiques ne le déforme pas lorsque le mélangeur 3 est en action, le mélangeur 3 devant rester rigide. Une extrémité supérieure (en haut) du fil rigide hélicoïdal 36 se termine par une spire déformée 35 s'étendant perpendiculairement à l'axe d'hélicoïde, afin de rigidifier le couplage mécanique au deuxième actionneur 31. L'autre extrémité 37 (en bas) du fil rigide hélicoïdal 36 est de préférence ronde et lisse. De façon plus générale, le fil rigide hélicoïdal 36 et la spire déformée 35 sont préférentiellement constitué d'un fil rond et lisse dont le diamètre de section est choisi pour comme étant suffisant grand pour induire de suffisamment de rigidité au mélangeur 3 pour éviter sa déformation lorsqu'il est en action, sans être trop grand afin de limiter le poids du mélangeur 3.

Le fil rigide hélicoïdal 36 ne s'étend pas dans toute la cuve 4, mais sur une hauteur axiale (c'est-à-dire, le long de l'axe d'hélicoïde) HH. La spire déformée 35 est prolongée par un fil rigide rectiligne 34 du même matériau s'étendant selon l'axe d'hélicoïde en partie dans la cuve 4, afin de permettre le déplacement du fil rigide hélicoïdal 36, dans la cuve 4, selon l'axe d'hélicoïde. La partie du fil rigide rectiligne 34 s'étendant dans la cuve 4 (lorsque le mélangeur est au repos) est de hauteur HC. C'est précisément de cette hauteur que le fil rigide hélicoïdal 36 peut se déplacer parallèlement à l'axe d'hélicoïde dans la cuve 4. La hauteur HC définit donc la course du mélangeur 3. Celle-ci est typiquement de 50 à 70% du diamètre de la cuve 4 afin de permettre un mélange et une aération du compost suffisants par couche. La hauteur globale H du fil rigide rectiligne 34 est choisie pour pouvoir traverser l'enceinte 13 et y agencé le deuxième actionneur 31 en son extrémité, par exemple, par vissage d'une portion filetée 33 du fil rigide rectiligne 34 d'une hauteur HF dans une tige femelle filetée 32 du deuxième actionneur 31.

Pour une cuve 4 d'un diamètre de 30 cm, les valeurs purement exemplatives et totalement non limitatives des paramètres susdits sont données : HC = 17 cm, ou de façon générale entre 15 et 20 cm ; HH = 50 cm ; HS = 13,5 cm ; DH = 22 cm, ou de façon générale, entre 20 et 25 cm ; E = 4 cm, ou de façon générale, entre 2,5 et 5 cm ; nombre de spires = 3,7, ou de façon générale, entre 3 et 6 ; diamètre de section du fil rigide hélicoïdal 36 = 1 cm ; poids du mélangeur < 3 kg. Un homme du métier comprendra que ces données numériques sont à adapter en proportion (%) au regard du diamètre de la cuve 4, pour d'autres diamètres de cuve 4, par exemple, 25 cm, 35 cm, 40 cm, 45 cm, à l'exception de l'espace E qui peut soit être constant, soit être adapté en proportion. Les valeurs de HF et de H sont moins dépendantes quant à elles de la taille de la cuve 4, et davantage de celle de l'enceinte 13. Des exemples non limitatifs de valeurs numériques sont données par HF = 4,7 cm et H = 41,3 cm.

Une cartouche 8 contenant une composition insecticide peut être agencée au-dessus de la cuve 4, comme illustré en figure 1B et selon les commentaires de l'exposé de l'invention.

Comme illustré en figures 1A et 1B, le composteur 1 est également pourvu d'un système d'aération 5 comprenant un ventilateur 51 agencé dans une entrée d'air dans la paroi latérale 41 de la cuve, en haut de la cuve, de telle sorte qu'il surmonte au moins en partie la cuve. Le ventilateur 51 permet d'aspirer de l'air ambiant extérieur dans la cuve 4, et d'oxygéner le compost de façon à accélérer le compostage. Une fois l'air pénétré dans la cuve 4, il peut en sortir par des orifices 52 de circulation d'air percés sur une circonférence de la paroi latérale 41 de la cuve 4, en bas de la cuve 4, au niveau du fond 42 de celle-ci. L'air traverse ainsi l'ensemble de la cuve 4, de haut en bas, avant de sortir de celle-ci. Une sortie d'air 53 spécifique peut être aménagée sur la paroi latérale 41 et couplée de façon fluidique à une partie des orifices 52 représentés en figures 1A et 1B. La sortie d'air 53 comprend une cloison latérale adaptée pour guider la circulation d'air spécifiquement hors de la cuve, et enfermant des capteurs 7 de paramètres pour évaluer des conditions de compostage dans la cuve 4. Ainsi, les capteurs 7 sont spécifiquement agencés en sortie d'air 53 pour ne capter que de l'air sortant de la cuve 4, de sorte que la mesure des capteurs 7 n'est pas perturbée par de l'air ambiant extérieur. La sortie d'air 53 comprend un filtre d'air comme expliqué dans l'exposé de l'invention. Le filtre d'air est alors de préférence agencé en sortie des capteurs 7.

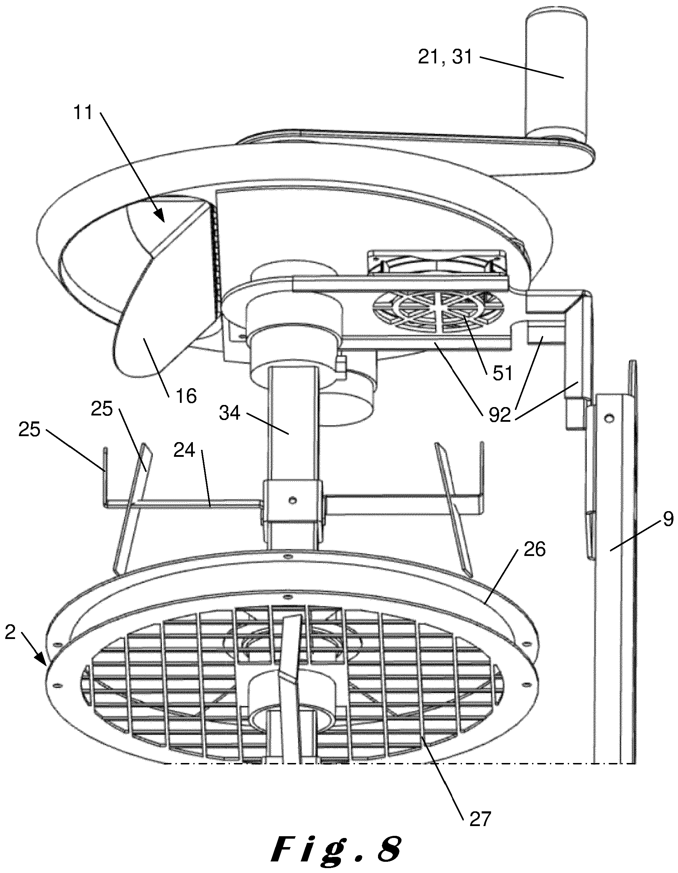

Le deuxième mode de réalisation est représenté globalement aux figures 5Aà 10B. Ce composteur 1 comprend une enceinte 13 dans laquelle est pratiqué un passage définissant une entrée 11 par laquelle peuvent être introduit des déchets organiques. Un couvercle 15 est agencé dans le passage pour le recouvrir et ce pour des raisons esthétiques et hygiéniques. Comme visible en figure 8, l'entrée 11 surmonte un déflecteur 16 orienté à l'opposé d'une cartouche 8 (visible sur les figures 5A, 6B et 8) contenant une composition insecticide comme introduite dans le premier mode de réalisation. Le déflecteur 16 vise à empêcher des mouches attirées par la cartouche 8 de passer par l'entrée 11 pour sortir du composteur 1. Il joue un rôle esthétique et de sécurité pour occulter les éléments mécaniques et déchets organiques dans l'enceinte 13 de la vue de l'utilisateur.

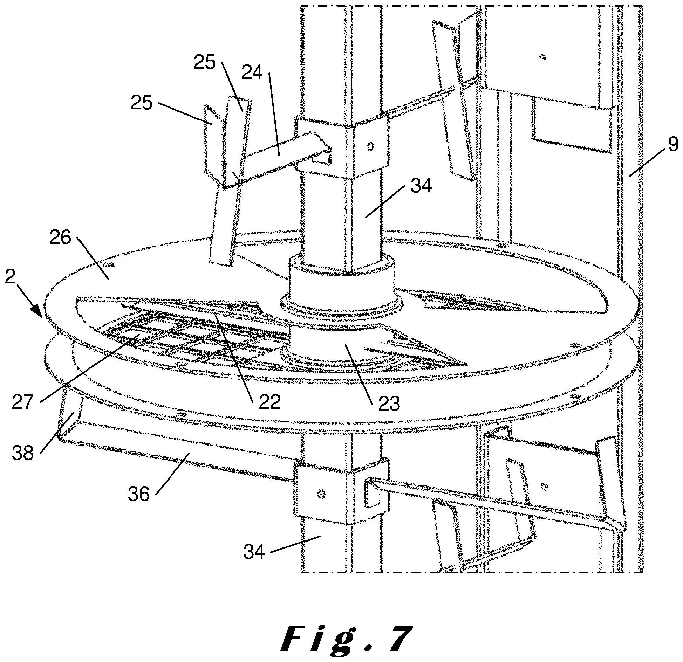

L'enceinte abrite partiellement et borde un broyeur 2 visible en figure 7. Une fois broyé, les déchets organiques sont entraînés vers le bas, dans une cuve 4 de compostage visible en figures 5A à 6B. Une différence avec le premier mode de réalisation est que l'enceinte abrite des moyens de mélange 24, 25, semblables à un mélangeur 3 agencé dans la cuve pour y mélanger les déchets organiques. Une autre différence est qu'un axe mécanique 34 rotatif creux traverse l'enceinte 13 et la cuve 4, du niveau de l'entrée 11 (en haut), jusqu'au niveau d'un fond 42 de la cuve 4 (en bas), sans toucher ce fond 42, et que cet axe mécanique 34 entraine par rotation le broyeur 2, les moyens de mélange 24, 25 et le mélangeur 3, via un seul actionneur manuel 21, 31 (correspondant aux précédents premier et deuxième actionneur) sous la forme d'une manivelle à tourner par un utilisateur. Cet actionneur 21, 31 est agencé sur une paroi supérieure du composteur, au même niveau que l'entrée 11, pour une utilisation aisée.

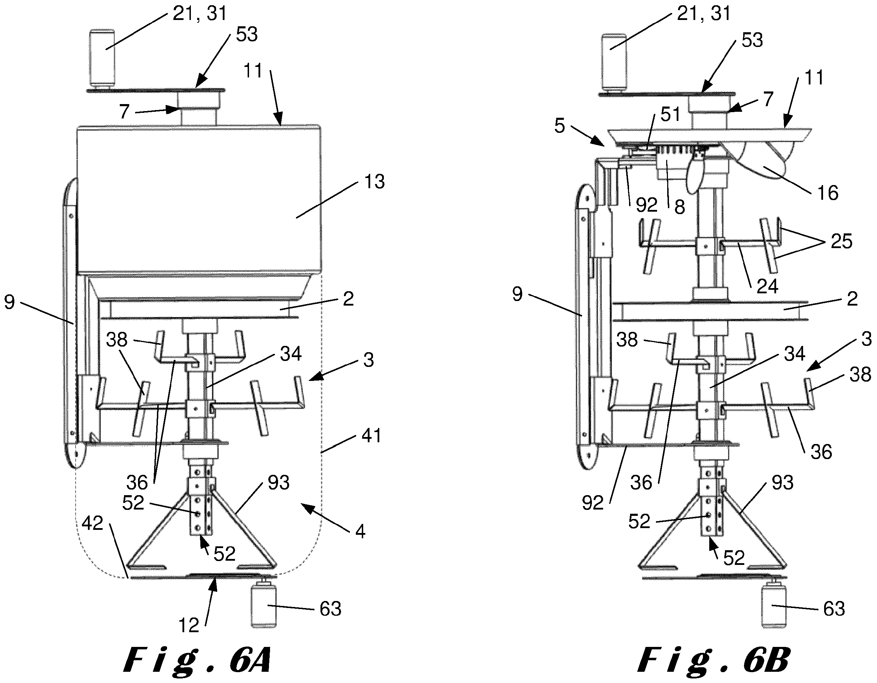

L'enceinte 13 comprend une paroi ayant une portion inférieure (ou du bas) conique prolongeant un bord latéral du broyeur 2 comme illustré en figure 6A, de façon à séparer complètement l'espace de l'enceinte 13 de celle de la cuve 4 ci-après introduite, celle-ci étant bordé par le broyeur 2.

Les figures 6B, 7 et 8 illustrent plus précisément le broyeur 2 et l'intérieur de l'enceinte 13. Les moyens de mélange 24, 25 sont préférentiellement semblables au mélangeur 3 et comprennent une pale 24 s'étendant le long d'un diamètre de l'enceinte 13, en gardant toutefois une distance semblable à E la séparant de la paroi de l'enceinte 13. La pale 24 comprend des extensions transverses 25 pour améliorer l'aération des déchets organiques dans l'enceinte 13. L'objectif de ces moyens de mélange 24, 25 est aussi de faire descendre par gravité les déchets à travers le broyeur 2 jusque dans la cuve 4.

Comme visible sur la figure 7, le broyeur 2 comprend une lame 22 rotative s'étendant perpendiculairement à l'axe mécanique 34 et couplé à celui-ci via un mécanisme 23 réalisable de diverses façons connues (par exemple, via un oeillet). La lame 22 est enfermée axialement entre, au-dessus, deux secteurs circulaires 26 d'une plaque circulaire perpendiculaire à l'axe mécanique 34 constituant une structure de division des déchets, et en dessous, une grille 27 bordant la cuve 4 et étant perpendiculaire à l'axe mécanique 24. Une grille 27 ayant des trous de 1,5 à 2 cm de diamètre convient pour calibrer la taille des déchets organiques dans la cuve 4 comme détaillé dans l'exposé de l'invention. Bien que les deux secteurs 26 soient représentés comme étant plats, presque sans épaisseur, sur les figures 6Aà 8, un mode de réalisation où ils seraient beaucoup plus épais, par exemple de 1,0 à 2,0 cm, dans une direction correspondant à l'axe mécanique 34, pour des raisons de solidité et de résistance, ne se départirait pas du cadre de l'invention. De préférence, bien que cela ne soit pas représenté en figure 7, la lame 22 est bidirectionnelle et de bord extrémal arrondi pour accroître l'effet de cisaillement de la coupe.

La cuve 4 est principalement cylindrique, mais son fond 42 est partiellement sphérique, ou plus précisément il a la forme d'une sphère écrasée, lui donnant un design particulièrement esthétique et pratique à manipuler. Elle a par exemple un diamètre de 30 cm. La hauteur axiale totale du composteur 1 est d'environ 90 cm pour un volume en compost d'environ 50 litres. Tant la forme que les dimensions que la capacité de la cuve sont modulables selon les besoins domestiques, sans affecter d'aucune façon le fonctionnement du composteur 1. Le cas d'une cuve 4 cylindrique ou partiellement cylindrique, dans tous les cas avec une paroi latérale 41 et un fond 42 lisses est préféré pour les mêmes raisons qu'exposés au regard du premier mode de réalisation, ceci s'appliquant de façon générale dans le cadre de l'invention.

Les déchets organiques broyés tombent ainsi par gravité dans la cuve 4 à travers la grille 27. Le compost mûr formera du terreau au fond 42 de la cuve 4 étant donné que c'est là où sont les déchets organiques broyés les plus anciens et donc à un stade plus avancé de compostage. Comme il est visible aux figures 5B et 6A, le fond 42 de la cuve 4 comprend une portion amovible 61 qui peut être déplacée au moyen d'une poignée 63. Un joint 62 assure l'étanchéité au niveau du fond 42 de la cuve 4 en regard de la portion amovible 61. Une fois la portion amovible 61 déplacée, il suffit de récolter le terreau dans un contenant manuel et de replacer la portion amovible 61. Ces moyens techniques définissent une sortie 12 du composteur 1.

Pour permettre une homogénéisation et une aération adéquate des déchets organiques broyés dans la cuve 4, un mélangeur 3 est agencé en son sein. Tel que visible en figures 6A et 6B, il comprend deux pales 36 rotatives portées par l'axe mécanique 34 s'étendant perpendiculairement à celui-ci, jusqu'à des côtés opposés de la paroi latérale 41 de la cuve 4, tout en laissant toutefois un espace entre les pales et la paroi latérale 41, assimilable en terme d'usage et de taille à l'espace E introduit pour le premier mode de réalisation. Les pales 36 sont situées dans la moitié supérieure (du haut) de la cuve 4 pour ne pas affecter le terreau au fond 42 de la cuve 4. Elles comprennent des extensions transverses 38 orientés pour aérer et mélanger efficacement le compost par couche tel que décrit dans l'exposé de l'invention.

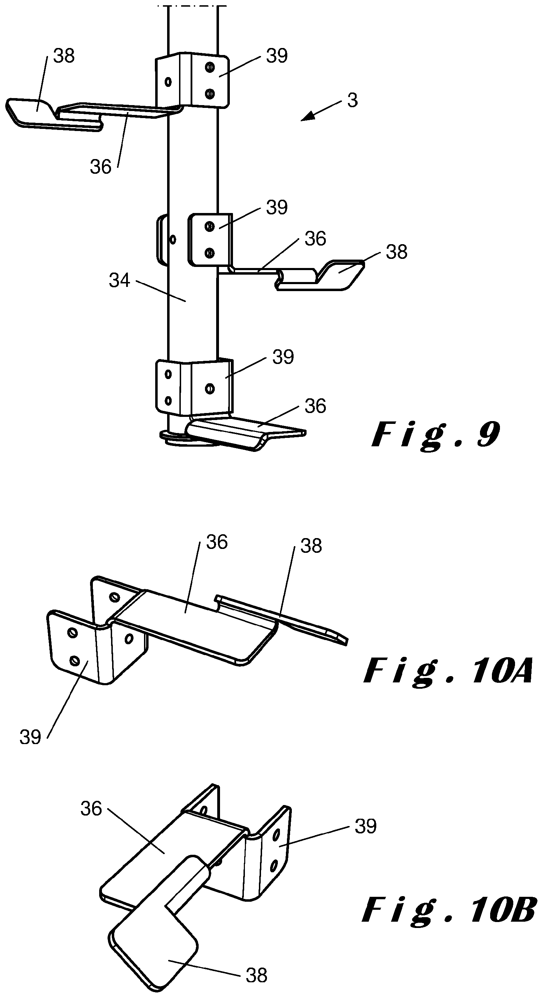

La figure 9 illustre un mélangeur alternatif pour à celui visible aux figures 6Aà 7 pour le composteur 1 selon le deuxième mode de réalisation. Comme selon la réalisation précédente du mélangeur 3, plusieurs pales 36 s'étendent à partir de l'axe mécanique 34, certaines pales 36 comprenant une extension 38 en leur extrémité libre (celle qui est opposée à celle qui est attachée à l'axe mécanique 34). Dans cette réalisation, les pales 36 ne s'étendent pas de part et d'autre de l'axe mécanique 34, mais uniquement d'un côté. De préférence, quatre pales 36 sont prévues sur l'axe mécanique 34, dans la cuve 4. Chaque pale 36 est décalée de 90° par rapport à l'autre, les pales 36 étant ainsi agencées en escalier tournant tel que visible en figure 9 où trois pales sont représentées. La pale 36 la plus proche du fond 42 peut comprendre ou non l'extension en son extrémité libre ; dans le cas de la figure 9, elle est sans extension pour limiter les mouvements au sein du compost plus mur.

Les pales 36 du mélangeur 3 illustré en figure 9 sont également visibles en figures 10A et 10B isolément. Chaque pale 36 illustrée en figure 9 comprend une portion 39 adaptée pour épouser au moins en partie la forme de l'axe mécanique 34 pour être fixée de façon solide et résistante à celui-ci. Une partie principale de la pale 36 est essentiellement plane et s'étend à partir de la portion 39 de façon perpendiculaire à l'axe mécanique 34. L'extension 38 de la pale 36 est agencée à partir d'un rebord plié de la partie principale et s'étend selon un plan sécant avec celui de la pale 36, formant un plus petit angle d'environ 145° entre eux. La façon avec laquelle est formée l'extension 38 à partir de se rebord plié, et l'épaisseur de la pale 36 (i.e. de préférence de 2,0 à 5,0 mm) la rende particulièrement résistante aux efforts exercés dessus. L'extension 38 est orientée pour soulever des déchets vers le haut et assurer une bonne aération de ceux-ci, comme il est décrit dans l'exposé de l'invention. Les extensions 38 s'étendent relativement peu vers le haut (et sont par exemple d'une hauteur projetée sur l'axe mécanique 34 d'environ 1,5 à 2,0 cm), de façon à ne pas non plus induire un trop grand mélange du compost et des déchets, et donc de conserver un compostage par couche. Cette hauteur limitée permet aussi de limiter les efforts nécessaires pour actionner le mélangeur 3.

Les pales 24, 36 et leurs extensions 25, 38, telles qu'illustrées en figures 6Aà 10B sont préférentiellement représentatives de leur positionnement exact, de leur géométrie et de leur orientation, de sorte que de telles caractéristiques implicites à la vue de ces figures font pleinement partie de l'invention.

Afin d'aérer plus spécifiquement le terreau au fond 42 de la cuve, mais aussi de le manipuler éventuellement via la sortie 12, il peut être prévu des pieds 93 fixés à l'axe mécanique 34 et s'étendant de façon transverse de celui-ci jusqu'au fond 42 de la cuve 4. Par exemple, deux tels pieds 93 dirigés et orientés à l'opposé par rapport à l'axe mécanique 34 sont prévus, ayant ensemble une forme triangulaire partielle reposant au niveau du fond 42. Les pieds 93 ne touchent néanmoins pas le fond 42 pour des raisons évidentes, notamment pour que la rotation de l'axe mécanique 34 ne nécessite pas trop d'efforts et qu'aucune friction des parties du composteur 1 les unes contre les autres ne soit générée, ce qui réduirait la durée de vie du composteur 1. Ces mêmes raisons s'appliquent pour justifier un espace E entre les pales 24, 36 (et/ou les extensions 25, 38) avec la paroi latérale 41 de la cuve 4. Alternativement, l'axe mécanique 34 peut être basé inférieurement au niveau du fond 42 de la cuve 4, sans que de tels pieds 93 soient présents, et sans que l'axe mécanique 34 ne soit en contact ou en friction avec le fond 42.

Le composteur 1 est pourvu d'un système d'aération 5 visible en figures 5A, 6B et 8. Ce système d'aération 5 comprend un ventilateur 51 agencé dans une entrée d'air dans la paroi supérieure du composteur 1, en haut de l'enceinte 13, de sorte qu'il surmonte l'enceinte 13 et la cuve 4. Le ventilateur 51 vise à aspirer de l'air ambiant extérieur dans la cuve 4, et d'oxygéner le compost dans l'enceinte 13 et dans la cuve 4 de façon à accélérer le compostage. Une fois l'air pénétré dans la cuve 4, il peut en sortir par des orifices 52 de circulation d'air percés en bas de l'axe mécanique 34, ainsi que par l'extrémité ouverte de l'axe mécanique 34, cette extrémité constituant également un tel orifice 52. Ainsi, les orifices 52 sont agencés au niveau du fond 42 de la cuve 4. L'air traverse ainsi l'ensemble de la cuve 4, de haut en bas, avant de sortir de celle-ci via l'axe mécanique 34 creux. L'air remonte alors dans l'axe mécanique 34 jusqu'à une sortie d'air 53 pratiquée dans la paroi supérieure du composteur 1 (ou comme illustré, dans la manivelle pour plus de compacité du composteur 1). Cette sortie d'air comprend un filtre d'air et est précédée de capteurs 7 agencés dans l'axe mécanique 34. De façon avantageuse, par rapport au premier mode de réalisation, la cloison latérale qui enferme les capteurs 7 et guide la circulation d'air hors de la cuve n'est autre que l'axe mécanique 34 lui-même, ou plutôt son extrémité supérieure (en haut). Cela de grands avantages en terme de conception du composteur 1 car le ventilateur 51, les capteurs 7, le filtre d'air, la cartouche 8 sont tous agencés au niveau de la paroi supérieure du composteur 1, et car il n'est pas nécessaire de prévoir une cloison latérale pour les capteurs 7. L'industrialisation de ces pièces techniques, leur remplacement et leur réparation sont ainsi facilités, tandis que les dimensions de l'enceinte 13 et de la cuve 4 peuvent également être adaptées, par exemple, en hauteur, à un plus grand volume de compostage sans remplacer l'ensemble de ces pièces techniques.

Le composteur 1 selon la présente invention peut être posé sur un support, ou suspendu à mur. Le deuxième mode de réalisation représente une structure mécanique 9 de fixation murale du composteur 1 agencée à cheval sur la paroi latérale 41 de la cuve 4 et sur celle de l'enceinte 13. Cette structure mécanique 9 comprend des emplacements d'ancrage 91 du composteur 1 tel que visibles en figures 5A et 5B. Tel que visible en figures 6B et 8, deux bras mécaniques de rigidité couplent mécaniquement la structure mécanique 9 et l'axe mécanique 34, de façon à stabiliser et accroître la rigidité du composteur 1.

En résumé, l'invention concerne un composteur 1 domestique de déchets organiques muni d'un système d'aération 5 et d'un broyeur 2 surmontant une cuve 4 dans laquelle est agencé un mélangeur 3. L'invention a été présentement décrite en relation avec des modes de réalisations spécifiques, qui ont une valeur purement illustrative et ne doivent aucunement être considérés comme limitatifs. Les valeurs numériques fournies à titre indicatif dans ce document le sont avec une marge d'erreur de 5%. D'une manière générale, il apparaîtra évident pour un homme du métier que la présente invention n'est pas limitée aux exemples illustrés et/ou décrits ci-dessus, et que sa portée est définie par les revendications ci-après introduites.

## Revendications

1. Composteur (1) domestique de déchets organiques comprenant :
- une entrée (11) pour recevoir des déchets organiques ;
- un broyeur (2) pour broyer les déchets organiques, couplé à un premier actionneur (21) ;
- une cuve (4) surmontée par le broyeur (2) et agencée pour contenir les déchets organiques broyés par le broyeur (2) ;
- un mélangeur (3) agencé dans la cuve (4) pour mélanger les déchets organiques broyés contenus dans la cuve (4), couplé à un deuxième actionneur (31) ;
- une sortie (12) agencée au niveau d'un fond (42) de la cuve (4) pour récupérer un terreau produit par compostage des déchets organiques contenus dans la cuve (4) ;
- un système d'aération (5) comprenant :
▪ une entrée d'air surmontant au moins partiellement la cuve (4) et au sein de laquelle est agencé un ventilateur (51) ;
▪ des orifices (52) de circulation d'air dans la cuve (4), au niveau du fond (42) de la cuve (4) ;
▪ une sortie d'air (53) couplée fluidiquement aux orifices (52) ;
le système d'aération (5) étant configuré pour générer une circulation d'air dans la cuve (4), de l'entrée d'air, vers la sortie d'air (53), via les orifices (52).

2. Composteur (1) selon la revendication précédente, dans lequel les premier (21) et deuxième (31) actionneurs sont manuels.

3. Composteur (1) selon l'une quelconque des revendications précédentes, comprenant en outre un ensemble d'un ou plusieurs capteurs (7) parmi :
- un capteur de température et/ou d'humidité d'un air dans la cuve (4) ;
- un capteur de température et/ou d'humidité des déchets organiques broyés et/ou du terreau contenus dans la cuve (4) ;
- un capteur d'une sélection de gaz de compostage dans la cuve (4) ; les capteurs (7) étant configurés pour transmettre des données à une unité logique de traitement de données.

4. Composteur (1) selon la revendications précédente, dans lequel au moins une partie des capteurs (7) sont agencés au niveau de la sortie d'air (53) et entourés d'une cloison latérale adaptée pour guider la circulation d'air.

5. Composteur (1) selon la revendication 3 ou 4, dans lequel les capteurs (7) comprennent un capteur d'humidité des déchets organiques broyés et/ou du terreau contenus dans la cuve (4), ce capteur d'humidité étant couplé électroniquement au ventilateur (51), de telle sorte qu'une puissance du ventilateur (51) dépend d'une donnée de sortie du capteur d'humidité.

6. Composteur (1) selon l'une quelconque des revendications 1 à 5, dans lequel les orifices (52) sont pratiqués dans une paroi latérale (41) de la cuve (4), et dans lequel la sortie d'air (53) est adjacente à la paroi latérale (41) et agencée au niveau du fond (42) de la cuve (4).

7. Composteur (1) selon l'une quelconque des revendications 1 à 5, dans lequel les orifices (52) sont pratiqués dans une partie basse d'un tube traversant la cuve (4), et dans lequel la sortie d'air (53) est adjacente à l'entrée d'air.

8. Composteur (1) selon l'une quelconque des revendications précédentes, dans lequel le fond (42) de la cuve (4) comprend une portion amovible (61) apte à être déplacée pour permettre une récupération du terreau de la cuve (4) dans un contenant (6).

9. Composteur (1) selon la revendication précédente, comprenant en outre un tiroir coulissant surmonté et bordé par le fond (42) de la cuve (4) et consistant en le contenant (6).

10. Composteur (1) selon l'une quelconque des revendications précédentes, comprenant en outre une cartouche (8) comprenant une portion supérieure de support prenant appui sur une paroi supérieure du composteur (1) et faisant saillie hors de la cuve (4), une portion inférieure contenant une composition insecticide, et une portion intermédiaire s'étendant de la portion supérieure et à la portion de support, et comprenant au moins une ouverture dimensionnée pour permettre le passage d'insectes, la portion intermédiaire étant en communication fluidique avec la cuve (4).

11. Composteur (1) selon l'une quelconque des revendications précédentes, comprenant en outre une enceinte (13) surmontant la cuve (4) et abritant et/ou bordant le broyeur (2), l'entrée (11) comprenant un passage pratiqué dans l'enceinte (13), de telle sorte que les déchets organiques reçus par l'entrée (11) pénètrent dans l'enceinte (13) préalablement à leur broyage par le broyeur (2).

12. Composteur (1) selon l'une quelconque des revendications précédentes, dans lequel les premier (21) et deuxième (31) actionneurs sont formés d'une même pièce mécanique couplée mécaniquement à un axe mécanique (34) apte à entraîner à la fois le broyeur (2) et le mélangeur (3).

13. Composteur (1) selon l'une quelconque des revendications précédentes, dans lequel le broyeur (2) comprend :
- une pluralité de lames agencées sur des roues dentées (22) partiellement superposées et orientées vers la cuve (4), ou
- une lame (22) rotative surmontant une grille (27) bordant la cuve (4).

14. Composteur (1) selon l'une quelconque des revendications 1 à 13, dans lequel le mélangeur (3) comprend un fil rigide hélicoïdal (36) s'étendant autour d'un axe d'hélicoïde, et dimensionné pour être déplacé dans la cuve (4) en rotation autour de l'axe d'hélicoïde et/ou parallèlement à l'axe d'hélicoïde au moyen du deuxième actionneur (31).

15. Composteur (1) selon l'une quelconque des revendications 1 à 13, dans lequel le mélangeur (3) comprend une pale (36) portée par un axe mécanique (34) rotatif traversant au moins partiellement la cuve (4) et dirigé de la sortie (12) vers l'entrée (11), la pale (36) s'étendant orthogonalement à celui-ci.

16. Composteur (1) selon la revendication précédente, dans lequel la pale (36) est munie d'au moins une extension (38) qui lui est transverse, qui prolonge une extrémité libre de la pale (36) et qui est orientée de la sortie (12) vers l'entrée (11) à partir de la pale (36) selon un plan sécant à la pale (36) formant un plus petit angle avec elle compris entre 130° et 160°.

17. Utilisation d'un composteur (1) selon l'une quelconque des revendications précédentes pour produire un terreau par compostage de déchets organiques.

## Patentansprüche

1. Haushaltskompostiergerät (1) für organische Abfälle, umfassend:
- einen Einlass (11) zum Aufnehmen von organischen Abfällen;
- einen Häcksler (2) zum Zerkleinern der organischen Abfälle, der mit einer ersten Betätigungsvorrichtung (21) gekoppelt ist;
- einen Behälter (4), der von dem Häcksler (2) überragt wird und angeordnet ist, um die durch den Häcksler (2) zerkleinerten organischen Abfälle zu enthalten;
- einen Mischer (3), der zum Mischen der zerkleinerten organischen Abfälle, die in dem Behälter (4) enthalten sind, in dem Behälter (4) angeordnet ist, der mit einer zweiten Betätigungsvorrichtung (31) gekoppelt ist;
- einen Auslass (12), der auf Höhe eines Bodens (42) des Behälters (4) zum Rückgewinnen einer Komposterde angeordnet ist, die durch Kompostieren der in dem Behälter (4) enthaltenen organischen Abfälle produziert wird;
- ein Belüftungssystem (5), umfassend:
- einen Lufteinlass, der den Behälter (4) mindestens teilweise überragt und innerhalb dessen ein Gebläse (51) angeordnet ist;
- Luftzirkulationsöffnungen (52) in dem Behälter (4) auf Höhe des Bodens (42) des Behälters (4);
- einenLuftauslass, der fluidisch mit den Öffnungen (52) gekoppelt ist;
wobei das Belüftungssystem (5) konfiguriert ist, um in dem Behälter (4) über die Öffnungen (52) eine Luftzirkulation von dem Lufteinlass in Richtung des Luftauslasses (53) zu erzeugen.

2. Kompostiergerät (1) nach dem vorstehenden Anspruch, wobei die erste (21) und zweite (31) Betätigungsvorrichtung manuell sind.

3. Kompostiergerät (1) nach einem der vorstehenden Ansprüche, weiter umfassend einen Satz von einem oder mehreren Sensoren (7), darunter:
- einen Sensor für die Temperatur und/oder die Feuchtigkeit einer Luft in dem Behälter (4);
- einen Sensor für die Temperatur und/oder die Feuchtigkeit von zerkleinerten organischen Abfällen und/oder Komposterde, die in dem Behälter (4) enthalten sind;
- einen Sensor einer Auswahl von Kompostiergas in dem Behälter (4);
wobei die Sensoren (7) konfiguriert sind, um Daten an eine logische Datenverarbeitungseinheit zu übertragen.

4. Kompostiergerät (1) nach dem vorstehenden Anspruch, wobei mindestens ein Teil der Sensoren (7) auf Höhe des Luftauslasses (53) angeordnet und von einer seitlichen Trennwand umgeben sind, die angeordnet ist, um die Luftzirkulation zu lenken.

5. Kompostiergerät (1) nach Anspruch 3 oder 4, wobei die Sensoren (7) einen Sensor für die Feuchtigkeit der in dem Behälter (4) enthaltenen zerkleinerten organischen Abfälle und/oder Komposterde umfassen, wobei dieser Sensor derart elektronisch mit dem Gebläse (51) gekoppelt ist, dass eine Leistung des Gebläses (51) von Auslassdaten des Sensors für die Feuchtigkeit abhängt.

6. Kompostiergerät (1) nach einem der Ansprüche 1 bis 5, wobei die Öffnungen (52) in einer seitlichen Wand (41) des Behälters (4) praktiziert sind und wobei der Luftauslass (53) der seitlichen Wand (41) benachbart und auf Höhe des Bodens (42) des Behälters (4) angeordnet vorliegt.

7. Kompostiergerät (1) nach einem der Ansprüche 1 bis 5, wobei die Öffnungen (52) in einem unteren Teil eines Rohrs praktiziert sind, das den Behälter (4) durchquert, und wobei der Luftauslass (53) dem Lufteinlass benachbart ist.

8. Kompostiergerät (1) nach einem der vorstehenden Ansprüche, wobei der Boden (42) des Behälters (4) ein herausnehmbares Teilstück (61) umfasst, das geeignet ist, versetzt zu werden, um eine Rückgewinnung der Komposterde des Behälters (4) in ein Behältnis (6) zu gestatten.

9. Kompostiergerät (1) nach dem vorstehenden Anspruch, weiter umfassend eine gleitende Schublade, die von dem Boden (42) des Behälters (4) überragt und davon eingefasst wird und aus dem Behältnis (6) besteht.

10. Kompostiergerät (1) nach einem der vorstehenden Ansprüche, weiter umfassend eine Kartusche (8), die ein oberes Trägerteilstück umfasst, das auf einer oberen Wand des Kompostiergeräts (1) anliegt und aus dem Behälter (4) herausragt, wobei ein unteres Teilstück eine Insektizidzusammensetzung enthält und ein Zwischenteilstück sich von dem oberen Teilstück und zu dem Trägerteilstück erstreckt und umfassend mindestens ein Loch, das bemessen ist, um den Durchgang von Insekten zu gestatten, wobei das Zwischenteilstück in strömungstechnischer Kommunikation mit dem Behälter (4) vorliegt.

11. Kompostiergerät (1) nach einem der vorstehenden Ansprüche, weiter umfassend ein Gehäuse (13), das den Behälter (4) überragt und den Häcksler (2) beherbergt und/oder einfasst, wobei der Einlass (11) einen in dem Gehäuse (13) praktizierten Durchgang derart umfasst, dass die durch den Einlass (11) aufgenommenen organischen Abfälle vor deren Zerkleinerung durch den Häcksler (2) in das Gehäuse (13) gelangen.

12. Kompostiergerät (1) nach einem der vorstehenden Ansprüche, wobei die erste (21) und zweite (31) Betätigungsvorrichtung aus einem gleichen mechanischen Werkstück gebildet sind, das mechanisch mit einer mechanischen Achse (34) gekoppelt ist, die geeignet ist, gleichzeitig den Häcksler (2) und den Mischer (3) anzutreiben.

13. Kompostiergerät (1) nach einem der vorstehenden Ansprüche, wobei der Häcksler (2) umfasst:
- eine Vielzahl von Klingen, die auf Zahnrädern (22) angeordnet sind, die teilweise überlagert und in Richtung des Behälters (4) orientiert sind, oder
- eine rotierende Klinge (22), die ein Gitter (27) überbrückt, das den Behälter (4) einfasst.

14. Kompostiergerät (1) nach einem der Ansprüche 1 bis 13, wobei der Mischer (3) einen starren schraubenförmigen Draht (36) umfasst, der sich um eine schraubenförmige Achse herum erstreckt und bemessen ist, um in dem Behälter (4) um die schraubenförmige Achse herum rotierend und/oder mittels der zweiten Betätigungsvorrichtung (31) parallel zu der schraubenförmigen Achse verschoben zu werden.

15. Kompostiergerät (1) nach einem der Ansprüche 1 bis 13, wobei der Mischer (3) ein Schaufelblatt (36) umfasst, das von einer rotierenden mechanischen Achse (34) getragen wird, die den Behälter (4) mindestens teilweise durchquert und von dem Auslass (12) in Richtung des Einlasses (11) geführt ist, wobei sich das Schaufelblatt (36) orthogonal zu dieser erstreckt.

16. Kompostiergerät (1) nach dem vorstehenden Anspruch, wobei das Schaufelblatt (36) mit mindestens einer Erweiterung (38) ausgestattet ist, die quer zu ihm vorliegt, die ein freies Ende des Schaufelblatts (36) verlängert und die ausgehend von dem Schaufelblatt (36) gemäß einer Ebene, die das Schaufelblatt (36) schneidet, von dem Auslass (12) in Richtung des Einlasses (11) orientiert ist, wodurch mit ihm ein kleinerer Winkel zwischen 130° und 160° gebildet wird.

17. Verwendung eines Kompostiergeräts (1) nach einem der vorstehenden Ansprüche zum Produzieren einer Komposterde durch Kompostierung organischer Abfälle.

## Claims

1. A domestic organic waste composter (1) comprising:
- an inlet (11) for receiving organic waste;
- a grinder (2) for grinding the organic waste, coupled to a first actuator (21);
- a tank (4) surmounted by the grinder (2) and arranged to contain the organic waste grinded by the grinder (2);
- a mixer (3) arranged in the tank (4) to mix the grinded organic waste contained in the tank (4), coupled to a second actuator (31);
- an outlet (12) arranged at the level of a bottom (42) of the tank (4) to recover a potting soil produced by composting the organic waste contained in the tank (4);
- an aeration system (5) comprising:
∘ an air inlet at least partially surmounting the tank (4) and containing a fan (51);
∘ orifices (52) for circulating air in the tank (4), at the level of the bottom (42) of the tank (4);
∘ an air outlet (53) coupled in a fluidic manner to the orifices (52);
the aeration system (5) being configured to generate a circulation of air in the tank (4), from the air inlet towards the air outlet (53), via the orifices (52).

2. The composter (1) according to the preceding claim, wherein the first (21) and second (31) actuators are manual.

3. The composter (1) according to any one of the preceding claims, further comprising a set of one or more sensors (7) from:
- a temperature and/or humidity sensor for the air in the tank (4);
- a temperature and/or humidity sensor for the grinded organic waste and/or the potting soil contained in the tank (4);
- a sensor for a selection of composting gases in the tank (4);
the sensors (7) being configured to transmit data to a data processing logic unit.

4. The composter (1) according to the preceding claims, wherein at least some of the sensors (7) are arranged at the level of the air outlet (53) and surrounded by a lateral bulkhead adapted to guide the air circulation.

5. The composter (1) according to claim 3 or 4, wherein the sensors (7) comprise a sensor for the humidity of the grinded organic waste and/or the potting soil contained in the tank (4), this humidity sensor being electronically coupled to the fan (51), such that a power of the fan (51) depends on an output data of the humidity sensor.

6. The composter (1) according to any one of claims 1 to 5, wherein the orifices (52) are fitted in a side wall (41) of the tank (4), and wherein the air outlet (53) is adjacent to the side wall (41) and arranged at the level of the bottom (42) of the tank (4).

7. The composter (1) according to any one of claims 1 to 5, wherein the orifices (52) are fitted in a lower portion of a tube passing through the tank (4), and in which the air outlet (53) is adjacent to the air inlet.

8. The composter (1) according to any one of the preceding claims, wherein the bottom (42) of the tank (4) comprises a removable segment (61) capable of being moved to allow the potting soil to be recovered from the tank (4) into a container (6).

9. The composter (1) according to the preceding claim, also comprising a sliding drawer surmounted and bordered by the bottom (42) of the tank (4) and consisting of the container (6).

10. The composter (1) according to any one of the preceding claims, further comprising a cartridge (8) comprising an upper support segment bearing on an upper wall of the composter (1) and projecting out of the tank (4), a lower segment containing an insecticide composition, and an intermediate segment extending from the upper segment and to the support segment, and comprising at least one opening dimensioned to allow the passage of insects, the intermediate segment being in fluidic communication with the tank (4).

11. The composter (1) according to any one of the preceding claims, further comprising an enclosure (13) surmounting the tank (4) and housing and/or bordering the grinder (2), the inlet (11) comprising a passage fitted in the enclosure (13), so that the organic waste received via the inlet (11) enters the enclosure (13) prior to being grinded by the grinder (2).

12. The composter (1) according to any one of the preceding claims, wherein the first (21) and second (31) actuators are formed by a single mechanical part mechanically coupled to a mechanical axle (34) capable of driving both the grinder (2) and the mixer (3).

13. The composter (1) according to any one of the preceding claims, wherein the grinder (2) comprises:
- a plurality of blades arranged on partially superimposed toothed wheels (22) and oriented towards the tank (4), or
- a rotating blade (22) surmounting a grid (27) bordering the tank (4).

14. The composter (1) according to any one of claims 1 to 13, wherein the mixer (3) comprises a rigid helical wire (36) extending about a helical axle, and dimensioned to be moved in the tank (4) in rotation about the helical axle and/or parallel to the helical axle by means of the second actuator (31).

15. The composter (1) according to any one of claims 1 to 13, wherein the mixer (3) comprises a paddle (36) carried by a rotating mechanical axle (34) passing at least partially through the tank (4) and directed from the outlet (12) towards the inlet (11), the paddle (36) extending orthogonally thereto.

16. The composter (1) according to the preceding claim, wherein the paddle (36) is equipped with at least one extension (38) which is transverse to it, which extends a free end of the paddle (36) and is oriented from the outlet (12) towards the inlet (11) from the paddle (36) in a plane secant to the paddle (36) forming a smallest angle therewith of between 130° and 160°.

17. A use of a composter (1) according to any one of the preceding claims to produce a potting soil by composting organic waste.
